# EUROPEAN PATENT APPLICATION

(11) **EP 4 757 363 A1**
(43) Date of publication of application: **10.06.2026**
(21) Application number: 24862035.3
(22) Date of filing: 05.09.2024
(51) Int. Cl.: H04W 8/18

(54) **COMMUNICATION METHOD AND APPARATUS**

(30) Priority: 06.09.2023 CN 202311148981
(71) Applicant: HUAWEI TECHNOLOGIES CO., LTD., Shenzhen 518129 (CN)
(72) Inventor: WANG, Fanfan, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2024/117146
(87) International publication number: WO 2025/051196

(57) **Abstract**

A communication method and apparatus are provided. The method includes: A first entity obtains information about a plurality of candidate cells of a terminal device. After determining that the terminal device switches to a first candidate cell of a first candidate entity, the first entity sends first information based on the information about the plurality of candidate cells, where the first information indicates to release a second candidate cell. The first candidate cell is one of the plurality of candidate cells, and the second candidate cell is one of the plurality of candidate cells. The first entity may be a serving entity, a source entity, or a candidate entity. According to the solutions, the first entity may indicate to release a part of the candidate cells, so that the terminal device stores an appropriate candidate cell set, to reduce determining implementation complexity of the terminal device. In addition, the candidate entity releases, in a timely manner, a cell radio resource reserved for the terminal device, to avoid a case in which a cell radio resource cannot be allocated to another terminal device due to excessive occupation of the resource by the terminal device, thereby efficiently utilizing cell resources.

## Description

This application claims priority to Chinese Patent Application No. 202311148981.X, filed with the China National Intellectual Property Administration on September 6, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In mobility management of a terminal device, a network side may preconfigure, for the terminal device, a plurality of candidate cells and trigger conditions corresponding to the plurality of candidate cells. After receiving the configuration, the terminal device may determine whether a trigger condition corresponding to each candidate cell is met. When a trigger condition corresponding to a candidate cell is met, the terminal device uses the candidate cell as a target cell, and accesses the target cell.

After accessing the target cell, the terminal device may still store the previous candidate cell configuration, and further evaluate the target cell based on configuration information related to the candidate cell. However, currently, there is no related solution for releasing these candidate cells.

### SUMMARY

Embodiments of this application provide a communication method and apparatus, to release a candidate cell of a terminal device in a timely manner, and improve utilization of a cell radio resource.

According to a first aspect, a communication method is provided. The method may be performed by a first entity; may be performed by a component of the first entity, for example, a processor, a chip, or a chip system of the first entity; or may be implemented by a logical module or software that can implement all or some functions of the first entity. The method includes: obtaining information about a plurality of candidate cells of a terminal device; determining that the terminal device switches to a first candidate cell of a first candidate entity, where the first candidate cell is one of the plurality of candidate cells; and sending first information based on the information about the plurality of candidate cells, where the first information indicates to release a second candidate cell, and the second candidate cell is one or more of the plurality of candidate cells.

According to this solution, the first entity (for example, a serving entity, a source entity, or a candidate entity of the terminal device) may determine that the terminal device accesses the first candidate cell, and send the first information, to indicate to release one or more other candidate cells. When the first entity sends the first information to a candidate entity to which a candidate cell that needs to be released belongs, the candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources.

In a possible design, the obtaining the information about the plurality of candidate cells of the terminal device includes: receiving the information about the plurality of candidate cells from a source entity.

Based on the possible design, when the first entity is a serving entity or a candidate entity of the terminal device, the source entity may send the information about the plurality of candidate cells to the first entity, so that the first entity learns of the plurality of candidate cells of the terminal device, to determine, from the plurality of candidate cells, a cell that needs to be released, and release a candidate cell of the terminal device in a timely manner.

In a possible design, the sending the first information includes: sending the first information to a source entity or a second candidate entity, where the second candidate entity is an entity to which the second candidate cell belongs.

Based on the possible design, when the first entity is a serving entity of the terminal device, the serving entity may send the first information to the source entity, to indicate to release the second candidate cell, so that the source entity can send information to the second candidate entity, to indicate to release the second candidate cell. Alternatively, the serving entity may send the first information to the second candidate entity, to indicate to release the second candidate cell. In other words, the second candidate entity can learn of the to-be-released second candidate cell, so that the second candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources.

In a possible design, the method further includes: sending second information to the terminal device, where the second information indicates to release configuration information of the second candidate cell.

Based on the possible design, the first candidate entity can send the second information to the terminal device to indicate the terminal device to release the second candidate cell. In this way, the terminal device releases or deactivates the configuration information of the second candidate cell, and does not further evaluate whether the second candidate cell can be used as a target cell in a subsequent handover process, to reduce determining complexity and power consumption of the terminal device.

In a possible design, the sending the second information to the terminal device includes: sending configuration information of the first candidate cell to the terminal device, where the configuration information of the first candidate cell includes the second information, and the configuration information of the first candidate cell is used by the terminal device to access the first candidate cell.

Based on the possible design, the first entity may indicate the second candidate cell when configuring the first candidate cell for the terminal device, so that the terminal device can learn that the second candidate cell may be released when the terminal device switches to the first candidate cell. Therefore, the second information does not need to be indicated by using a separate RRC message, so that signaling overheads can be reduced.

In a possible design, the determining that the terminal device switches to the first candidate cell of the first candidate entity includes: receiving third information from the first candidate entity, where the third information indicates that the terminal device switches to the first candidate cell.

Based on the possible design, when the first entity is a source entity or the second candidate entity, the first entity may learn, based on the third information, that the terminal device switches to the first candidate cell, so that the first entity can send the first information based on the information about the plurality of candidate cells, to release a candidate cell of the terminal device in a timely manner.

In a possible design, the sending the first information includes: sending the first information to the first candidate entity.

Based on the possible design, when the first entity is a source entity or the second candidate entity, the first entity sends the first information to the first candidate entity, so that the first candidate entity sends information to the second terminal device to indicate to release configuration information of the second candidate cell. In this way, the terminal device can release or deactivate the configuration information of the second candidate cell, and does not further evaluate whether the second candidate cell can be used as a target cell in a subsequent handover process, to reduce determining complexity and power consumption of the terminal device.

In a possible design, the first information includes at least one of the following: identification information of the second candidate cell, identification information allocated by the source entity to the terminal device, identification information allocated by the second candidate entity to the terminal device, or identification information of the source entity, where the second candidate entity is an entity to which the second candidate cell belongs.

In a possible design, the second candidate cell belongs to the second candidate entity, and the second candidate entity is different from the first candidate entity.

In a possible design, the information about the plurality of candidate cells includes respective identification information of the plurality of candidate cells; and the sending the first information based on the information about the plurality of candidate cells includes: determining, based on the respective identification information of the plurality of candidate cells, to release the second candidate cell; and sending the first information.

In a possible design, the source entity is configured to request configuration information of the plurality of candidate cells for the terminal device. For example, the source entity requests, from at least one candidate entity, the configuration information of the plurality of candidate cells for the terminal device, and sends RRC configuration information of the plurality of candidate cells to the terminal device. The plurality of candidate cells include the first candidate cell and the second candidate cell.

In a possible design, the source entity is a central unit CU, a source base station, or a master node MN in dual connectivity.

In a possible design, the plurality of candidate cells are configured to perform at least one of the following: continuous conditional handover CHO, continuous conditional primary secondary cell addition/change CPAC, or continuous layer 1/layer 2 triggered mobility LTM.

According to a second aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: receiving information of a plurality of candidate cells from a source entity; switching to a first candidate cell of a first candidate entity, where the first candidate cell is one of the plurality of candidate cells; and sending first information to the first candidate entity, where the first information indicates to release a second candidate cell, and the second candidate cell is one or more of the plurality of candidate cells.

According to this solution, the terminal device may send the first information to the first candidate entity, so that the first candidate entity can send information to the second candidate entity to indicate to release the second candidate cell. In this way, the second candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources.

In a possible design, the method further includes: receiving second information from the source entity, where the second information indicates a condition for releasing the second candidate cell.

In a possible design, the second information includes information indicating a timer and/or a maximum quantity of times of switching that correspond/corresponds to the second candidate cell.

In a possible design, the method further includes: when the timer expires, determining to release the second candidate cell.

In a possible design, the method further includes: when a quantity of times of switching to the second candidate cell is greater than or equal to the maximum quantity of times of switching, determining to release the second candidate cell.

In a possible design, the source entity is a central unit CU, a source base station, or a master node MN in dual connectivity.

In a possible design, the plurality of candidate cells are configured to perform at least one of the following: continuous conditional handover CHO, continuous conditional primary secondary cell addition/change CPAC, or continuous layer 1/layer 2 triggered mobility LTM.

According to a third aspect, a communication method is provided. The method may be performed by a source entity; may be performed by a component of the source entity, for example, a processor, a chip, or a chip system of the source entity; or may be implemented by a logical module or software that can implement all or some functions of the source entity. The method includes: sending information about a plurality of candidate cells of a terminal device to a first candidate entity, where the first candidate entity is an entity to which a first candidate cell belongs, and the first candidate cell is one of the plurality of candidate cells; receiving first information from the first candidate entity, where the first information indicates to release a second candidate cell, and the second candidate cell is one or more of the plurality of candidate cells; and sending the first information to a second candidate entity, where the second candidate entity is an entity to which the second candidate cell belongs.

According to this solution, after receiving the first information from the first candidate entity, the source entity may send information to the second candidate entity to indicate to release the second candidate cell. In this way, the second candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources.

According to a fourth aspect, a communication method is provided. The method may be performed by a first candidate entity; may be performed by a component of the first candidate entity, for example, a processor, a chip, or a chip system of the first candidate entity; or may be implemented by a logical module or software that can implement all or some functions of the first candidate entity. The method includes: receiving information about a plurality of candidate cells of a terminal device from a source entity; determining that the terminal device switches to a first candidate cell of a first candidate entity, where the first candidate cell is one of the plurality of candidate cells; sending third information to the source entity or a second candidate entity, where the third information indicates that the terminal device switches to the first candidate cell, the second candidate entity is an entity to which a second candidate cell belongs, and the second candidate cell is one or more of the plurality of candidate cells; and receiving first information from the source entity or the second candidate entity, where the first information indicates to release the second candidate cell.

According to this solution, after determining that the terminal device switches to the first candidate cell of the first candidate entity, the first candidate entity may send the third information to the source entity or the second candidate entity, so that the source entity or the second candidate entity learns that the terminal device switches to the first candidate cell of the first candidate entity, and the source entity or the second candidate entity may determine a cell that needs to be released, to release a candidate cell of the terminal device in a timely manner.

In a possible design, the method further includes: sending second information to the terminal device based on the first information, where the second information indicates to release configuration information of the second candidate cell.

According to a fifth aspect, a communication method is provided. The method may be performed by a source entity; may be performed by a component of the source entity, for example, a processor, a chip, or a chip system of the source entity; or may be implemented by a logical module or software that can implement all or some functions of the source entity. The method includes: sending information about a plurality of candidate cells to a terminal device; and sending second information to the terminal device, where the second information indicates a condition for releasing at least one of the plurality of candidate cells.

According to this solution, the source entity indicates, to the terminal device, a condition for releasing a candidate cell, so that the terminal device can determine, based on the condition, a candidate cell that needs to be released, and the terminal device can notify a candidate entity to release the candidate cell. In this way, the candidate entity can release a cell radio resource reserved for the terminal device, to avoid a case in which a cell radio resource cannot be allocated to another terminal device due to excessive occupation of the resource by the terminal device, thereby efficiently utilizing cell resources. In addition, the terminal device can release or deactivate configuration information of a part of the candidate cells, and does not further evaluate whether the part of the candidate cells can be used as a target cell in a subsequent handover process, to reduce determining complexity and power consumption of the terminal device.

In a possible design, the second information includes information indicating a timer and/or a maximum quantity of times of switching that correspond/corresponds to each of the plurality of candidate cells.

In a possible design, the method further includes: receiving first information from a first candidate entity, where the first information indicates to release a second candidate cell, the first candidate entity is an entity to which a first candidate cell belongs, the first candidate cell is a serving cell of the terminal device, and the second candidate cell is one or more of the plurality of candidate cells; and sending, to a second candidate entity, information indicating to release the second candidate cell, where the second candidate entity is an entity to which the second candidate cell belongs.

According to a sixth aspect, a communication apparatus is provided. The communication apparatus includes a unit or a module, and the unit or the module is configured to perform any method according to the first aspect to the fifth aspect.

According to a seventh aspect, a communication apparatus is provided to implement various methods. The communication apparatus may be the entity in the first aspect or the third aspect to the fifth aspect, or an apparatus included in the entity, for example, a chip or a chip system; or the communication apparatus may be the terminal device in the second aspect, or an apparatus included in the terminal device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver, or a communication interface.

According to an eighth aspect, a communication apparatus is provided, and includes a processor and a memory. The memory is configured to store computer instructions, and when the processor executes the instructions, the communication apparatus is caused to perform the method according to any one of the aspects. The communication apparatus may be the entity in the first aspect or the third aspect to the fifth aspect, or an apparatus included in the entity, for example, a chip or a chip system; or the communication apparatus may be the terminal device in the second aspect, or an apparatus included in the terminal device, for example, a chip or a chip system.

According to a ninth aspect, a communication apparatus is provided, including a processor and a communication interface. The communication interface is configured to communicate with a module other than the communication apparatus, and the processor is configured to execute a computer program or instructions, to cause the communication apparatus to perform the method according to any one of the foregoing aspects. The communication apparatus may be the entity in the first aspect or the third aspect to the fifth aspect, or an apparatus included in the entity, for example, a chip or a chip system; or the communication apparatus may be the terminal device in the second aspect, or an apparatus included in the terminal device, for example, a chip or a chip system.

According to a tenth aspect, a communication apparatus is provided, including at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the entity in the first aspect or the third aspect to the fifth aspect, or an apparatus included in the entity, for example, a chip or a chip system; or the communication apparatus may be the terminal device in the second aspect, or an apparatus included in the terminal device, for example, a chip or a chip system.

According to an eleventh aspect, a computer-readable storage medium is provided. The computer-readable storage medium stores a computer program or instructions. When the computer program or the instructions are run on a communication apparatus, the communication apparatus is caused to perform the method according to any one of the first aspect to the fifth aspect.

According to a twelfth aspect, a computer program product including instructions is provided. When the computer program product is run on a communication apparatus, the communication apparatus is caused to perform the method according to any one of the first aspect to the fifth aspect.

According to a thirteenth aspect, a communication apparatus is provided (for example, the communication apparatus may be a chip or a chip system). The communication apparatus includes a processor, configured to implement a function in any one of the first aspect to the fifth aspect.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that, when the communication apparatus provided in any one of the sixth aspect to the thirteenth aspect is a chip, a sending action/function of the communication apparatus may be understood as information output, and a receiving action/function of the communication apparatus may be understood as information input.

For technical effects brought by any one of the designs of the sixth aspect to the thirteenth aspect, refer to the technical effects of different designs of the first aspect to the fifth aspect. Details are not described herein again.

### BRIEF DESCRIPTION OF DRAWINGS

FIG. 1 is a diagram of a handover procedure according to this application;
FIG. 2 is a schematic flowchart of a conditional handover according to this application;
FIG. 3 is a diagram of an architecture of dual connectivity according to this application;
FIG. 4 is a schematic flowchart of PSCell addition according to this application;
FIG. 5 is a schematic flowchart of PSCell change according to this application;
FIG. 6 is a schematic flowchart of conditional PSCell addition according to this application;
FIG. 7 is a schematic flowchart of conditional PSCell change according to this application;
FIG. 8 is a schematic flowchart of LTM according to this application;
FIG. 9 is a diagram of an architecture of a communication system according to this application;
FIG. 10 is a diagram of a structure of a RAN entity according to this application;
FIG. 11 is a diagram of a structure of another RAN entity according to this application;
FIG. 12 is a schematic flowchart of a communication method according to this application;
FIG. 13 is a schematic flowchart of another communication method according to this application;
FIG. 14 is a schematic flowchart of still another communication method according to this application;
FIG. 15 is a schematic flowchart of yet another communication method according to this application;
FIG. 16 is a schematic flowchart of still yet another communication method according to this application;
FIG. 17 is a diagram of a structure of a communication apparatus according to this application;
FIG. 18 is a diagram of a structure of another communication apparatus according to this application; and
FIG. 19 is a diagram of a structure of still another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that in embodiments of this application, sequence numbers of processes do not mean execution sequences. The execution sequences of the processes should be determined based on functions and internal logic of the processes, and shall not constitute any limitation on implementation processes of embodiments of this application.

It may be understood that, in this application, "when" and "if" mean that corresponding processing is performed in an objective situation, are not intended to limit time, do not require a determining action during implementation, and do not mean any other limitation. That corresponding processing is performed in an objective situation may be understood as follows: The corresponding processing can be performed provided that the objective situation is met, or the corresponding processing can be performed only when the objective situation and another situation are met.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on requirements. Correspondingly, apparatus provided in embodiments of this application may also correspondingly implement these features or functions. Details are not described herein.

In this application, unless otherwise specified, for same or similar parts in embodiments, refer to each other. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

For ease of understanding of the technical solutions in embodiments of this application, technologies related to this application are first briefly described below.

### 1. Handover (handover)

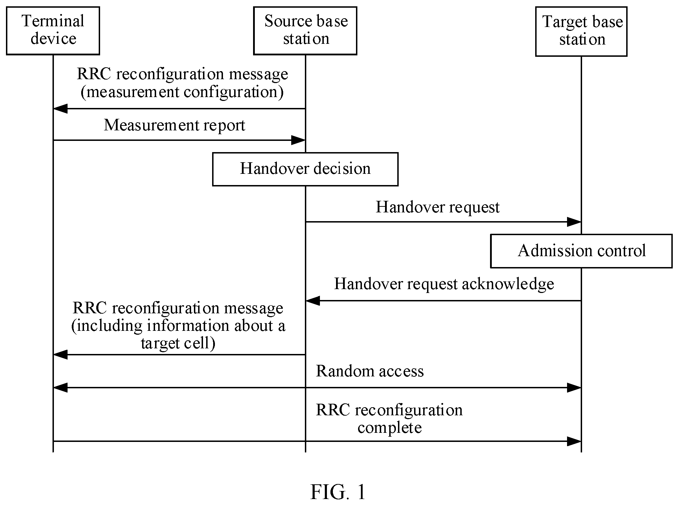

In a conventional handover procedure, a source base station indicates a target cell to a terminal device, and the terminal device accesses the target cell based on the indication of the source base station. For example, a conventional handover procedure is shown in FIG. 1.

Refer to FIG. 1. The source base station first sends a radio resource control (radio resource control, RRC) reconfiguration message to the terminal device for measurement configuration. The terminal device measures a cell based on the measurement configuration, and sends a measurement report to the source base station. The source base station performs handover decision (handover decision) based on the measurement report, and sends a handover request (handover request) message to a target base station when determining to hand over the terminal device to a target cell of the target base station.

The target base station performs admission control (admission control) after receiving the handover request message. When the terminal device is allowed to be handed over to the target cell, the target base station sends a handover request acknowledge message to the source base station, where the handover request acknowledge message may include configuration information used by the terminal device to access the target cell.

After receiving the handover request acknowledge message, the source base station sends an RRC reconfiguration message to the terminal device, where the RRC reconfiguration message includes content in the handover request acknowledge message. After receiving the RRC reconfiguration message, the terminal device initiates random access to the target cell based on the RRC reconfiguration message. After successfully accessing the target cell, the terminal device sends an RRC reconfiguration complete (RRC reconfiguration complete) message to the target base station.

### 2. Conditional handover (conditional handover, CHO)

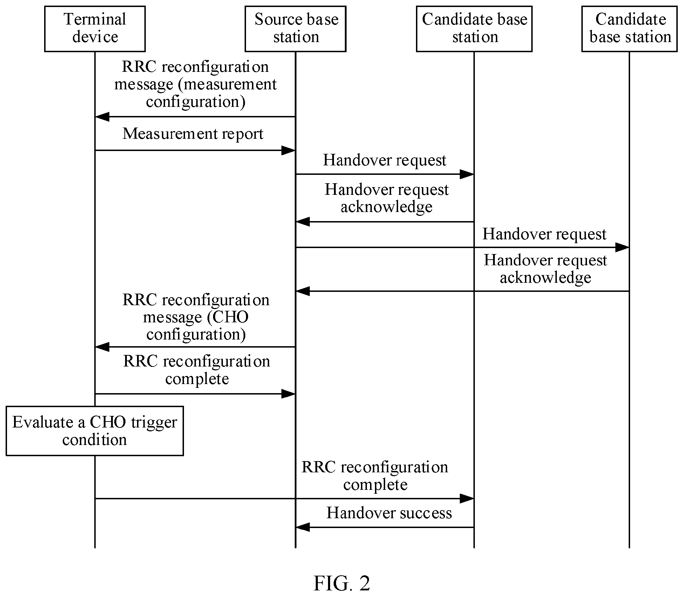

CHO is performed to increase a handover success rate. In CHO, a source base station may configure a plurality of candidate cells and corresponding handover trigger conditions for a terminal device when a source link is good in quality, and the terminal device determines a target cell from the plurality of candidate cells. For example, a CHO procedure is shown in FIG. 2.

Refer to FIG. 2. A difference between CHO and conventional handover lies in that: In CHO, the source base station may send a handover request message to a plurality of candidate base stations after receiving a measurement report, to configure a plurality of candidate cells for the terminal device. After receiving handover request acknowledge messages from the plurality of candidate base stations, the source base station may send an RRC reconfiguration message to the terminal device, where the RRC reconfiguration message carries a CHO configuration. The CHO configuration includes configuration information of one or more candidate cells and a handover trigger condition corresponding to the one or more candidate cells.

After receiving the RRC reconfiguration message carrying the CHO configuration, the terminal device sends an RRC reconfiguration complete message to the source base station. In addition, the terminal device evaluates a handover trigger condition based on the CHO configuration. When a handover trigger condition corresponding to a candidate cell is met, the terminal device uses the candidate cell as a target cell, and initiates random access to the target cell. After establishing an RRC connection to a target base station, the terminal device sends an RRC reconfiguration complete message to the target base station. The target base station sends a handover success message to the source base station.

### 3. Dual connectivity (dual connectivity, DC)

DC is also referred to as multi-radio dual connectivity (multi-radio dual connectivity, MR-DC). In DC, one terminal device may communicate with a plurality of base stations. A network side may provide communication services for the terminal device by using resources of the plurality of base stations, to provide high-rate transmission for the terminal device.

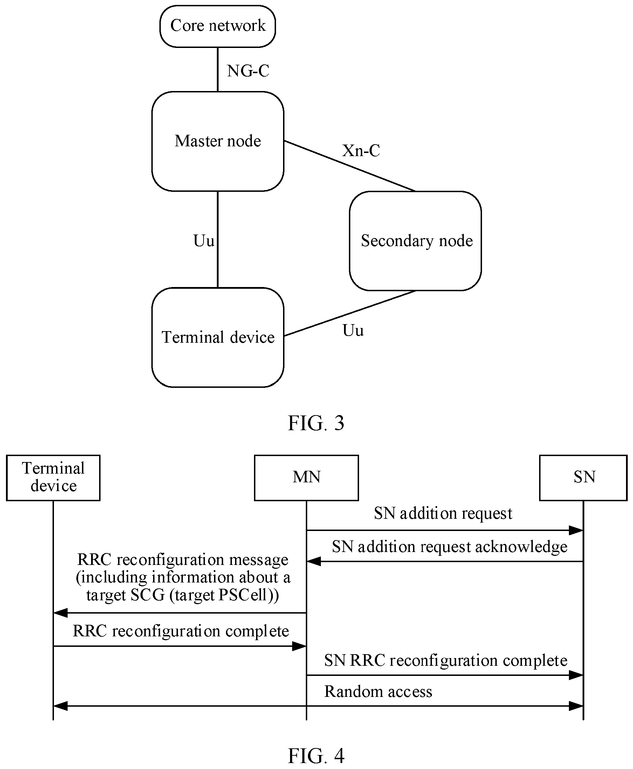

As shown in FIG. 3, in DC, one base station that exchanges control plane signaling with a core network is referred to as a master node (master node, MN), and another base station is referred to as a secondary node (secondary node, SN). For example, in FIG. 3, NG-C represents a control plane interface between the base station and the core network, Xn-C represents a control plane interface between the base stations, and Uu represents an interface between the base station and the terminal device.

In DC, the master node has a primary cell (primary cell, PCell), and the secondary node has a primary secondary cell (primary secondary cell, PSCell). The PCell is deployed at a primary carrier. The PCell may be understood as a cell to which the terminal device initiates initial connection establishment or connection reestablishment, or a cell indicated as a primary cell in a handover process. The PSCell may be understood as a cell to which the terminal device initiates random access on the secondary node, a cell to which the terminal device skips random access and initiates data transmission in a secondary node addition/change process, or a cell of the secondary node to which the terminal device initiates random access in a synchronization reconfiguration process.

In DC, the terminal device may receive services of a plurality of cells in one base station. A cell group in which the MN provides a service for the terminal device may be referred to as a master cell group (master cell group, MCG). A cell group in which the SN provides a service for the terminal device may be referred to as a secondary cell group (secondary cell group, SCG). The MCG and the SCG each include at least one cell. The MCG includes a PCell, and the SCG includes a PSCell. Cells in the MCG and the SCG other than the primary cell and the primary secondary cell may be referred to as secondary cells (secondary cells, SCells).

### 4. PSCell addition/change

PSCell addition is triggered by an MN. When a terminal device is in single connectivity (that is, no PSCell is configured), the MN triggers the PSCell addition. The MN may indicate a target PSCell to the terminal device, and the terminal device may initiate random access to the target PSCell. For example, a PSCell addition procedure is shown in FIG. 4.

Refer to FIG. 4. The MN may send an SN addition request (SN addition request) message to another base station (referred to as an SN). The SN may send an SN addition request acknowledge (SN addition request acknowledge) message to the MN, where the SN addition request acknowledge message carries information about a target SCG (including the target PSCell) configured by the SN for the terminal device. Then, the source MN sends the information about the target SCG to the terminal device in an RRC reconfiguration message. After receiving the information about the target SCG, the terminal device may initiate random access in the target PSCell, and send an RRC reconfiguration complete message to the MN. In addition, the MN further sends an SN RRC reconfiguration complete message to the SN.

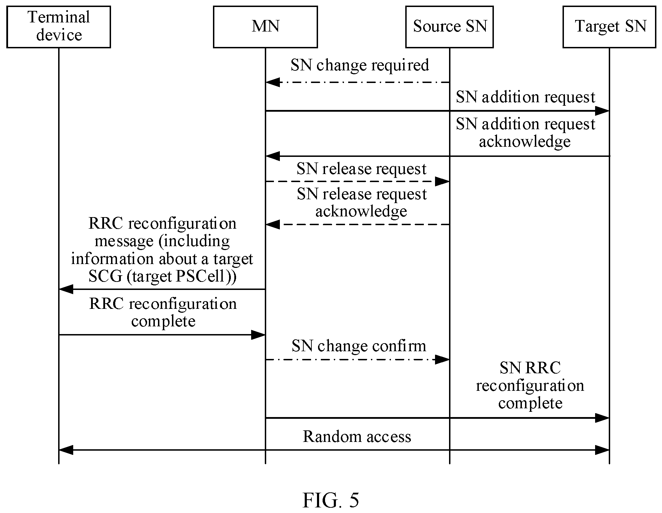

PSCell change may be triggered by the MN or a source SN. The PSCell change may be caused by movement of the terminal device. A network may indicate a target PSCell to the terminal device, and the terminal device may switch from a current PSCell to the target PSCell based on the indication of the network. For example, a PSCell change procedure is shown in FIG. 5.

Refer to FIG. 5. Steps corresponding to solid lines are the PSCell addition procedure triggered by the MN, and steps corresponding to solid lines and dashed lines are the PSCell change procedure triggered by the MN. Steps corresponding to solid lines and dash-dot lines are the PSCell change procedure triggered by the source SN. As shown in FIG. 5, a difference between the PSCell change procedure and the PSCell addition procedure that are triggered by the MN lies in that, in the MN-triggered PSCell change procedure, after the MN sends an SN addition request message to a target SN, the MN needs to send an SN release request message to the source SN, to notify the source SN to stop data transmission with the terminal device.

As shown in FIG. 5, based on the MN-triggered PSCell addition procedure, steps added to the source SN-triggered PSCell change procedure are as follows: After the source SN prepares a target PSCell for the terminal device, the source SN needs to send an SN change required (SN change required) message to the MN, so that the MN determines the target PSCell to be requested. In addition, after receiving an RRC reconfiguration complete message sent by the terminal device, the MN sends an SN change confirm (SN change confirm) message to the source SN, so that the source SN stops data transmission with the terminal device.

### 5. Conditional PSCell addition/change (conditional PSCell addition/change, CPAC)

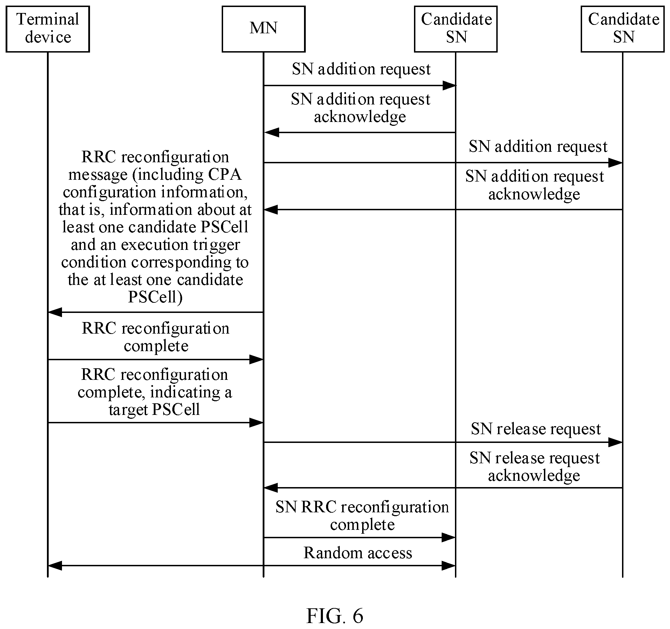

In a CPAC mechanism, an MN or a source SN may prepare a plurality of candidate PSCells and corresponding execution conditions for a terminal device in advance. Then, a network side may send a CPAC configuration to the terminal device, where the CPAC configuration includes configuration information of the plurality of candidate PSCells and the execution conditions corresponding to the plurality of candidate PSCells. Finally, the terminal device determines a target PSCell from the plurality of candidate PSCells and accesses the target PSCell. For example, a conditional PSCell addition (conditional PSCell addition, CPA) procedure is shown in FIG. 6.

Refer to FIG. 6. A difference between the CPA and the basic PSCell addition procedure shown in FIG. 4 lies in that, in the CPA, the MN may send an SN addition request message to one or more candidate SNs. After an SN addition request acknowledge message from the candidate SN is received, an RRC reconfiguration message sent by the MN to the terminal device may include CPAC configuration information. The CPAC configuration information may include configuration information of at least one candidate PSCell and an execution trigger condition corresponding to the at least one candidate PSCell. After receiving the CPAC configuration, the terminal device does not immediately add any candidate PSCell, but continuously determines whether there is a candidate PSCell that meets an execution trigger condition.

After determining that a candidate PSCell meets an execution trigger condition corresponding to the candidate PSCell, the terminal device uses the candidate PSCell as a target PSCell, and sends, to the MN, an RRC reconfiguration complete message indicating the target PSCell. In the RRC reconfiguration complete message, the target PSCell may be implicitly indicated by indicating configuration identification information corresponding to the target PSCell. The terminal device initiates random access to the target PSCell. After receiving the RRC reconfiguration complete message indicating the target PSCell, the MN sends an SN RRC reconfiguration complete message to a target SN and sends an SN release request message to another candidate SN.

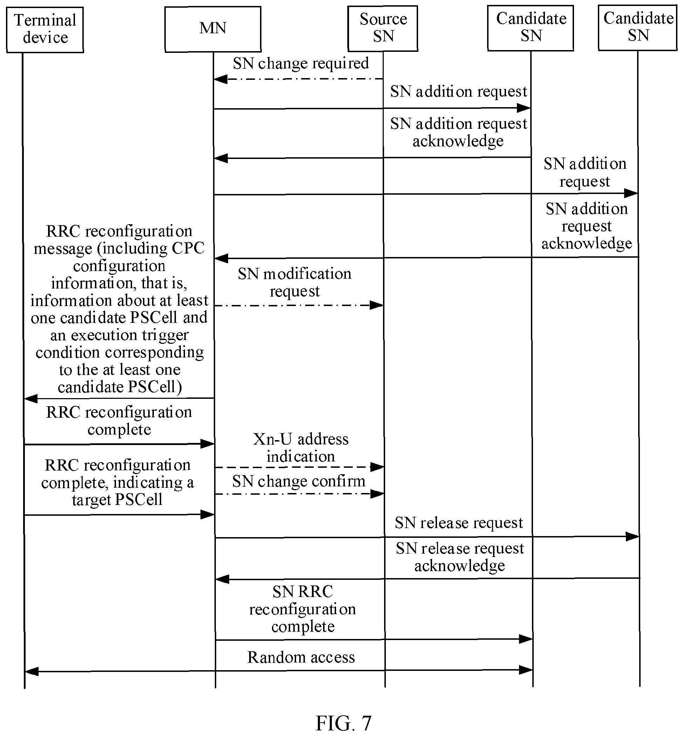

For example, a conditional PSCell change (conditional PSCell change, CPC) procedure is shown in FIG. 7. Steps corresponding to solid lines and dashed lines are the CPC procedure triggered by the MN. Steps corresponding to solid lines and dash-dot lines are the CPC procedure triggered by the source SN.

Refer to FIG. 7. Based on the MN-triggered CPA procedure shown in FIG. 6, steps added to the MN-triggered CPC procedure are as follows: After receiving an RRC reconfiguration complete message sent by the terminal device, the MN may send an Xn-U address indication (Xn-U address indication) to the source SN, to notify the source SN that CPAC has been configured for the terminal device, so that the source SN performs early data transfer to the candidate SN.

Refer to FIG. 7. Based on the MN-triggered CPA procedure shown in FIG. 6, steps added to the source SN-triggered CPC procedure are as follows: The source SN needs to send an SN change required (SN change required) message to the MN, so that the MN requests to add a candidate PSCell. In addition, the MN notifies, by using an SN modification request (SN modification request) before sending the CPAC configuration information to the terminal device or by using SN change confirm (SN change confirm) after sending the CPAC configuration information, the source SN of information about the candidate PSCell accepted by the candidate SN. The source SN may initiate a procedure to update configuration information (including one or more of a PSCell, an execution trigger condition, and a measurement configuration) of the candidate PSCell for the terminal device.

### 6. Layer 1/layer 2 triggered mobility (L1/L2 triggered mobility, LTM)

In an LTM mechanism, a network side sends LTM configuration information to a terminal device in advance, where the LTM configuration information includes configuration information of one or more candidate cells, and further includes L1 measurement control information; and the terminal device stores the LTM configuration information, and reports a layer 1 measurement report for the candidate cell to the network side. The network side determines a target cell from the plurality of candidate cells based on the layer 1 measurement report, and sends an LTM command to the terminal device to indicate the target cell. The LTM command is sent to the terminal device through an L2 media access control (media access control, MAC) control element (control element, CE). The terminal device accesses the target cell based on the LTM command by using configuration information of the target cell. The terminal device may access the target cell in a random access manner or a random access-less manner. To be specific, the terminal device performs uplink transmission/downlink reception based on an obtained valid timing advance (timing advance, TA) and beam information of the target cell.

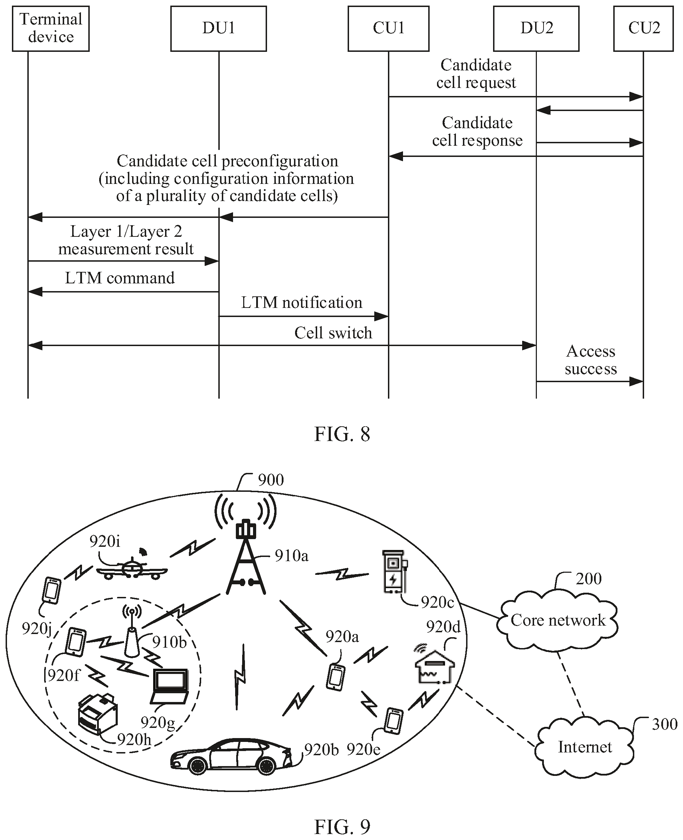

For example, an intra-central unit (central unit, CU) (intra-CU) LTM procedure or an inter-CU (inter-CU) LTM procedure is shown in FIG. 8.

Refer to FIG. 8. A source CU (CU1) may obtain configuration information of a plurality of candidate cells, and send a candidate cell preconfiguration message to the terminal device through a source distributed unit (distributed unit, DU) (DU1). The candidate cell preconfiguration message includes the configuration information of the plurality of candidate cells. For example, in intra-CU LTM, the source CU may request configuration information of a candidate cell from a candidate DU managed by the source CU (not shown in FIG. 8); or in inter-CU LTM, the source CU may request, through a candidate CU (CU2), configuration information of a candidate cell from a candidate DU (DU2) managed by the candidate CU.

After receiving the configuration information of the candidate cell, the terminal device may perform measurement, and send a layer 1 measurement result to a source DU. The source DU may determine a target cell based on the layer 1 measurement result, and send an LTM command to the terminal device, where the LTM command may indicate the target cell. In addition, the source DU may send an LTM notification (notification) to the source CU, to notify initiation of the LTM command and indicate the target cell. After receiving the LTM command, the terminal device may access a target DU (namely, a DU to which the target cell belongs). After the terminal device accesses the target DU, the target DU may send an access success message to a target CU. In the intra-CU LTM, the source CU and the target CU are the same. In the inter-CU LTM, the source CU and the target CU are different.

### 7. Continuous LTM, continuous CHO, and continuous CPAC

In a continuous LTM mechanism, after accessing a target cell, a terminal device still stores configuration information of a candidate cell, continues to measure the candidate cell, and sends an L1 measurement result to a current serving DU, so that the current serving DU determines a target cell for a next handover.

In a continuous CPAC mechanism, after accessing a candidate PSCell (namely, a target PSCell) that meets an execution trigger condition, the terminal device still stores CPAC configuration information from an MN, to continue to perform PSCell addition/change. A network side does not need to send an RRC reconfiguration message to the terminal device again to configure one or more candidate PSCells for subsequent PSCell addition/change.

In a continuous CHO mechanism, after switching to a candidate cell (namely, a target cell) that meets a handover trigger condition, the terminal device still stores CHO configuration information from a source base station, to continue to perform conditional handover. A network side does not need to send an RRC reconfiguration message to the terminal device again to configure one or more candidate cells for subsequent cell switch.

In other words, in the continuous LTM mechanism, the continuous CPAC mechanism, and the continuous CHO mechanism, after accessing the target cell, the terminal device may still store a previous candidate cell configuration, and continue to perform subsequent handover based on the candidate cell configuration. However, currently, there is no related solution for releasing these candidate cells.

In view of this, this application provides a communication method. In the method, after determining that a terminal device accesses a target cell, a serving entity, a source entity, or a candidate entity of the terminal device may indicate the terminal device and the candidate entity to release a part or all of candidate cells, so that the terminal device stores an appropriate candidate cell set, to reduce determining implementation complexity of the terminal device. In addition, the candidate entity releases, in a timely manner, a cell radio resource reserved for the terminal device, to avoid a case in which a cell radio resource cannot be allocated to another terminal device due to excessive occupation of the resource by the terminal device, thereby efficiently utilizing cell resources.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, an internet of things (Internet of Things, IoT) system, a non-terrestrial network (non-terrestrial network, NTN) system, and another next generation communication system. Alternatively, the communication system may be a non-3GPP communication system. This is not limited.

The foregoing communication systems applicable to this application are merely examples for description, and communication systems applicable to this application are not limited thereto. This is uniformly described herein, and details are not described below again.

FIG. 9 shows an example of a communication system according to this application. The communication system includes a radio access network (radio access network, RAN) 900. The RAN 900 includes at least one RAN entity (for example, 910a and 910b in FIG. 9, collectively referred to as 910) and at least one terminal device (for example, 920a to 920j in FIG. 9, collectively referred to as 920). The terminal device 920 is connected to at least one RAN entity 910 in a wireless manner.

Optionally, the RAN may further include another RAN entity, for example, a wireless relay device and/or a wireless backhaul device (not shown in FIG. 9). The communication system may further include a core network (core network, CN). The RAN entity 910 is connected to a core network in a wireless or wired manner. A core network device in the core network and the RAN entity 910 in the RAN 900 may be different physical devices, or may be a same physical device that integrates a logical function of the core network and a logical function of the radio access network.

The RAN 900 may be a 3GPP-related cellular system, for example, a 4G or 5G mobile communication system, or a future-oriented evolved system (for example, a 6th generation (6th generation, 6G) mobile communication system). Alternatively, the RAN 900 may be an open access network (open RAN, O-RAN or ORAN), a cloud radio access network (cloud radio access network, CRAN), or a wireless fidelity (wireless fidelity, Wi-Fi) system, or may be a communication system integrating two or more of the foregoing systems.

The RAN entity 910 may sometimes be referred to as an access network device, a RAN node, an access entity, an access node, or the like. The RAN entity is a part of the communication system, and is configured to help the terminal device implement radio access. A plurality of RAN entities 910 in the communication system may be entities of a same type, or may be entities of different types.

In some scenarios, roles of the RAN entity 910 and the terminal device 920 are relative. For example, the network element 920i in FIG. 9 may be a helicopter or an uncrewed aerial vehicle, and may be configured as a mobile base station. For the terminal device 920j that accesses the RAN 100 through the network element 920i, the network element 920i is a base station. However, for the RAN entity 910a, the network element 920i is a terminal device. The RAN entity 910 and the terminal device 920 are sometimes referred to as communication apparatuses. For example, the network elements 910a and 910b in FIG. 9 may be understood as communication apparatuses having a base station function, and the network elements 920a to 920j may be understood as communication apparatuses having a terminal function.

In a possible scenario, the RAN entity may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access entity in a Wi-Fi system, or the like. The RAN entity may be a macro base station (for example, 910a in FIG. 9), a micro base station or an indoor base station (for example, 910b in FIG. 9), a relay entity or a donor entity, or a radio controller in a CRAN scenario. Optionally, the RAN entity may alternatively be a server, a wearable device, a vehicle, a vehicle-mounted device, or the like. For example, a RAN entity in a vehicle to everything (vehicle to everything, V2X) technology may be a roadside unit (roadside unit, RSU).

In another possible scenario, a plurality of RAN entities coordinate to assist the terminal device in implementing wireless access, and different RAN entities separately implement some functions of a base station. For example, the RAN entity may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

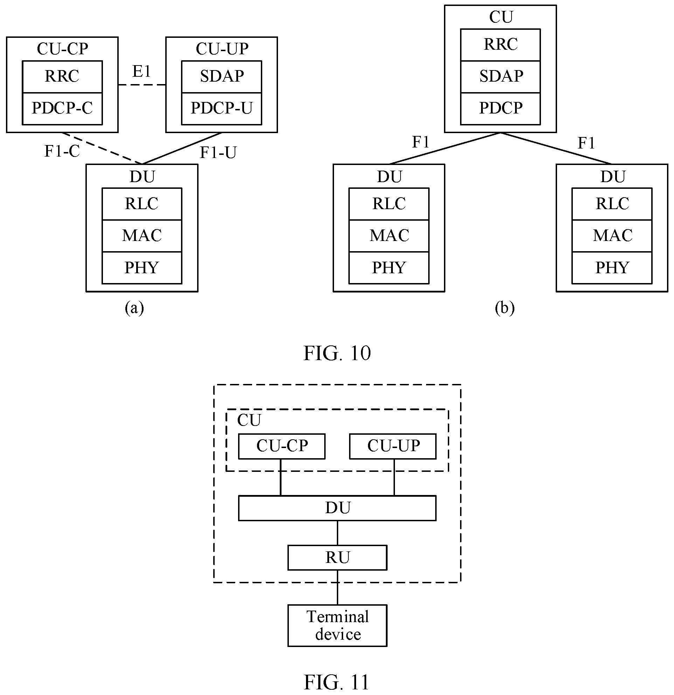

The CU and the DU split protocol layers of a base station. Functions of some protocol layers are centrally controlled by the CU, and functions of some or all remaining protocol layers are distributed in the DU. The CU may centrally control the DU. In an implementation, as shown in FIG. 10, a radio resource control (radio resource control, RRC) layer, a packet data convergence protocol (packet data convergence protocol, PDCP) layer, and a service data adaptation protocol (service data adaptation protocol, SDAP) layer in a protocol stack is deployed on the CU; and a radio link control (radio link control, RLC) layer, a media access control (media access control, MAC) layer, and a physical layer (physical layer, PHY) in the protocol stack is deployed on the DU. Therefore, the CU has processing capabilities of the RRC layer, the PDCP layer, and the SDAP layer. The DU has processing capabilities of the RLC layer, the MAC layer, and the PHY layer. In addition, (a) in FIG. 10 is a scenario in which the CU-CP and the CU-UP are separated, a PDCP-C is a PDCP control plane, and a PDCP-U is a PDCP data plane; and (b) in FIG. 10 is a scenario in which the CU-CP and the CU-UP are integrated. It may be understood that the foregoing function division is merely an example, and constitutes no limitation on the CU and the DU.

In a possible scenario, the DU has a higher layer (close to the MAC layer) function of the PHY layer, for example, forward error correction (forward error correction, FEC) encoding/decoding, scrambling/descrambling, or modulation/demodulation. The RU has a lower layer function of the PHY layer and a radio frequency function. For example, the lower layer function of the PHY layer includes at least one of the following: fast Fourier transform (fast Fourier transform, FFT), inverse fast Fourier transform (inverse fast Fourier transform, IFFT), digital beamforming, extraction and filtering of a physical random access channel (physical random access channel, PRACH), or the like.

In different systems, the CU (or the CU-CP and the CU-UP), the DU, or the RU may also have different names, but a person skilled in the art may understand meanings thereof. For example, as shown in FIG. 11, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

In a possible scenario, all or some functions of the RAN entity in this application may alternatively be implemented by using a software function running on hardware, or may be implemented by using a virtualization function instantiated on a platform (for example, a cloud platform). Alternatively, the RAN entity in this application may be a logical entity, a logical module, or software that can implement all or some functions of the RAN entity. Alternatively, the RAN entity in this application may be implemented by a software module, a hardware module, or a combination of the software module and the hardware module.

The terminal device 920 may be a user-side device having a wireless transceiver function. The terminal device 920 may also be referred to as user equipment (user equipment, UE), a terminal, an access terminal device, a subscriber unit, a subscriber station, a mobile station (mobile station, MS), a remote station, a remote terminal device, a mobile terminal device (mobile terminal, MT), a user terminal device, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a vehicle-mounted terminal device, a vehicle having a vehicle-to-vehicle (vehicle-to-vehicle, V2V) communication capability, an intelligent networked vehicle, or an uncrewed aerial vehicle having an uncrewed aerial vehicle (uncrewed aerial vehicle, UAV) to uncrewed aerial vehicle (UAV to UAV, U2U) communication capability. The terminal device may be mobile, or may be fixed. This is not specifically limited in this application.

With reference to the accompanying drawings, the following describes in detail the communication method provided in embodiments of this application by using interaction between the RAN entity and the terminal device shown in FIG. 9 as an example.

It can be understood that in embodiments of this application, the RAN entity or the terminal device may perform some or all of the steps in embodiment of this application. These steps or operations are merely examples. In embodiments of this application, other steps or variations of various steps may be further performed. In addition, the steps may be performed in a sequence different from that presented in embodiments of this application, and not all the operations in embodiments of this application may be necessarily performed.

It should be noted that, in the following embodiments of this application, names of messages or names of parameters in messages of devices are merely examples, and the messages or the parameters may have other names in specific implementations. This is not specifically limited in embodiments of this application.

It should be noted that, for ease of description, the RAN entity is referred to as an entity for short in the following embodiments of this application. In other words, the entity in the following embodiments of this application may be understood as the RAN entity.

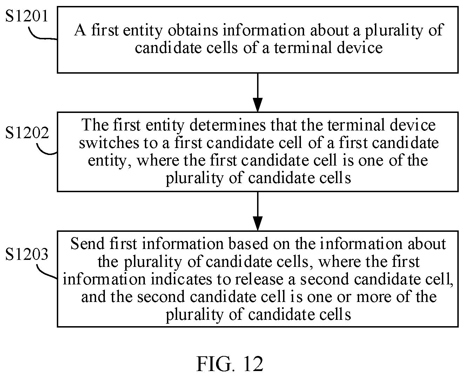

FIG. 12 is a schematic flowchart of a communication method according to an embodiment of this application. The communication method includes the following steps.

S1201: A first entity obtains information about a plurality of candidate cells of a terminal device.

In a possible implementation, the first entity may be a serving entity, a source entity, or a candidate entity (not a serving entity). It should be noted that, in this embodiment of this application, it is assumed that the terminal device first accesses the source entity, and the terminal device may subsequently access another entity, for example, access the another entity in a random access manner or a random access-less manner. Unless otherwise specified, the serving entity in this embodiment of this application is the another entity subsequently accessed by the terminal device.

Optionally, the source entity may be understood as an entity that requests configuration information of the plurality of candidate cells. In other words, the source entity is configured to request the configuration information of the plurality of candidate cells for the terminal device. For example, the source entity may request, for the terminal device, the configuration information of the plurality of candidate cells from at least one candidate entity, and send RRC configuration information of the plurality of candidate cells to the terminal device after receiving the configuration information of the candidate cells. For example, the source entity may be a CU, for example, a CU in a continuous intra-CU LTM scenario or a source CU in a continuous inter-CU LTM scenario; the source entity may be a source base station, for example, a source base station in a continuous CHO scenario; or the source entity may be an MN, for example, an MN in a continuous CPAC scenario, where a CPAC trigger node may be the MN or a source SN, and the MN requests a plurality of candidate cells for the terminal device.

Optionally, an entity to which each of the plurality of candidate cells belongs may be referred to as a candidate entity. For example, when the source entity is a CU in the continuous intra-CU LTM scenario, the candidate entity may be a DU managed by the CU; or when the source entity is a source CU in the continuous inter-CU LTM scenario, the candidate entity may be another CU (referred to as a candidate CU). When the source entity is a source base station, the candidate entity may be another base station (referred to as a candidate base station). When the source entity is an MN, the candidate entity may be an SN (referred to as a candidate SN).

It should be noted that names of the candidate cell and the candidate entity may change depending on an execution process. For example, after the terminal device determines a candidate cell in the plurality of candidate cells as a target cell, the candidate cell may be referred to as a target cell; and correspondingly, an entity to which the candidate cell belongs may be referred to as a target entity. After the terminal device accesses or switches to a target cell, the target cell may also be referred to as a serving cell; and correspondingly, an entity to which the cell belongs may be referred to as a serving entity. That is, a candidate cell may be respectively referred to as a candidate cell, a target cell, and a serving cell before handover, during handover, and after handover; and correspondingly, a candidate entity to which the candidate cell belongs may be respectively referred to as a candidate entity, a target entity, and a serving entity before the handover, during the handover, and after the handover.

For example, the plurality of candidate cells include a candidate cell 1, a candidate cell 2, and a candidate cell 3, and the three candidate cells respectively belong to a candidate entity 1, a candidate entity 2, and a candidate entity 3. It is assumed that the terminal device determines the candidate cell 1 as a target cell. In this case, the candidate cell 1 may be respectively referred to as a candidate cell, a target cell, and a serving cell before handover, during handover, and after handover, and the candidate entity 1 may be respectively referred to as a candidate entity, a target entity, and a serving entity before the handover, during the handover, and after the handover. Both the candidate cell 2 and the candidate cell 3 are candidate cells in the entire process, and both the candidate entity 2 and the candidate entity 3 are candidate entities in the entire process.

Optionally, when the first entity is a serving entity, it indicates that a cell serving the terminal device may be a candidate cell (also referred to as a target cell) to which the terminal device performs access or switches based on the information about the plurality of candidate cells. For example, based on the foregoing example, the terminal device accesses the candidate cell 1, and in this case, the first entity is the candidate entity 1.

Optionally, when the first entity is a candidate entity, the candidate entity is not a serving entity. For example, based on the foregoing example, the terminal device accesses the candidate cell 1, and in this case, the first entity may be the candidate entity 2 or the candidate entity 3.

Optionally, the plurality of candidate cells may be used for at least one of continuous CHO, continuous CPAC, or continuous LTM.

Optionally, the information about the plurality of candidate cells may include respective identification information of the plurality of candidate cells. For example, identification information of a candidate cell may be one or more of a cell global identifier (cell global identifier, CGI) of the candidate cell, a physical cell identifier (physical cell identifier, PCI) and a carrier, a PCI, a cell identifier (cell identifier, cell ID), a non-public network identifier (non-public network identifier, NPN ID), a non-terrestrial network identifier (non-terrestrial network identifier, NTN ID), cell configuration identification information, and another cell identifier. The CGI may include a PLMN identifier and a cell ID, and may further include a tracking area code (tracking area code, TAC).

In addition, the first entity may further obtain one or more of identification information allocated by the source entity to the terminal device, identification information of the source entity, and identification information allocated by the candidate entity to the terminal device. The one or more pieces of information may indicate that the candidate cell is a candidate cell of the terminal device.

Optionally, when the first entity is a source entity, the source entity may determine at least one initial candidate cell for the terminal device based on a measurement report reported by the terminal device, and send a request message to the candidate entity to request configuration information of the initial candidate cell. The request message may include identification information of the initial candidate cell. Correspondingly, the candidate entity may send a response message, where the response message includes the configuration information of the initial candidate cell, and may further include the identification information of the initial candidate cell. Based on this, if a candidate entity to which an initial candidate cell belongs returns configuration information of the initial candidate cell, the source entity may determine the initial candidate cell as a real candidate cell, to determine identification information of the candidate cell.

When the first entity is a serving entity or a candidate entity, that the first entity obtains the information about the plurality of candidate cells of the terminal device may include: The first entity receives the information about the plurality of candidate cells from the source entity. For a manner in which the source entity obtains the information about the plurality of candidate cells, refer to the descriptions in the previous paragraph.

S1202: The first entity determines that the terminal device switches to a first candidate cell of a first candidate entity. The first candidate cell is one of the plurality of candidate cells.

Optionally, that the terminal device switches to the first candidate cell of the first candidate entity may also be understood as that the terminal device accesses the first candidate entity, or the terminal device accesses the first candidate cell, or the terminal device accesses the first cell of the first candidate entity, which may be replaced with each other.

Optionally, when the terminal device switches to the first candidate cell of the first candidate entity, the first candidate cell may also be referred to as a target cell or a serving cell, and the first candidate entity may also be referred to as a target entity or a serving entity. For details, refer to the related descriptions of the names of the cell and the entity in step S1201. The details are not described herein again.

In a possible implementation, when the first entity is a serving entity (namely, the first candidate entity), after the terminal device successfully switches to/successfully accesses the first candidate cell, the first candidate entity may determine that the terminal device switches to/accesses the first candidate cell of the first candidate entity.

In another possible implementation, when the first entity is a source entity or a candidate entity, after the terminal device successfully switches to/successfully accesses the first candidate cell, the first candidate entity may send third information to the first entity, where the third information indicates that the terminal device switches to the first candidate cell. Therefore, that the first entity determines that the terminal device switches to the first candidate cell of the first candidate entity may include: The first entity receives the third information from the first candidate entity. After receiving the third information, the first entity may learn that the terminal device switches to the first candidate cell of the first candidate entity.

S1203: The first entity sends first information based on the information about the plurality of candidate cells.

The first information indicates to release a second candidate cell. For example, the first information may indicate information about the to-be-released second candidate cell. Information about a candidate cell includes identification information of the candidate cell.

The second candidate cell is one or more of the plurality of candidate cells, which may also be expressed as that the second candidate cell is all or a part of the plurality of candidate cells. For example, the first entity may determine the second candidate cell from the plurality of candidate cells.

Optionally, the second candidate cell may be one or more candidate cells of the first entity, or may be one or more candidate cells of at least one other candidate entity than the first entity, or may include one or more candidate cells of the first entity and one or more other candidate cells of at least one other candidate entity.

Optionally, the second candidate cell may not include the first candidate cell, that is, the to-be-released candidate cell does not include the first candidate cell. Alternatively, the second candidate cell may include the first candidate cell, that is, the to-be-released candidate cell includes the first candidate cell.

Optionally, the second candidate cell belongs to a second candidate entity. The second candidate entity and the first candidate entity may be the same or different. In the following embodiments of this application, descriptions are provided by using an example in which the second candidate entity and the first candidate entity are different.

Optionally, that the first information indicates to release the second candidate cell may also be understood as that the first information indicates to release or deactivate a resource of the second candidate cell allocated to the terminal device.

Optionally, after determining that the terminal device switches to the first candidate cell, the first entity may determine a serving entity of the terminal device, to determine the second candidate cell that needs to be released by the terminal device under the serving entity, so as to send the first information.

Optionally, when the first entity is a serving entity, the first entity may send the first information to the source entity or the second candidate entity; when the first entity is a source entity, the first entity may send the first information to the serving entity or the second candidate entity; or when the first entity is a candidate entity, the first entity may send the first information to the serving entity or the source entity.

Optionally, the first information may include at least one of the following: identification information of the second candidate cell, identification information allocated by the source entity to the terminal device, identification information allocated by the second candidate entity to the terminal device, or identification information of the source entity. For example, the identification information allocated by the source entity to the terminal device and the identification information allocated by the second candidate entity to the terminal device may be used by a receiver of the first information to identify the terminal device, so that with reference to the identification information of the second candidate cell, the receiver of the first information can identify the resource of the second candidate cell allocated to the terminal device.

Optionally, when the information about the plurality of candidate cells includes the respective identification information of the plurality of candidate cells, that the first entity sends the first information based on the information about the plurality of candidate cells may include: The first entity determines, based on the respective identification information of the plurality of candidate cells, to release the second candidate cell. For example, the first entity identifies the plurality of candidate cells based on the respective identification information of the plurality of candidate cells, and determines the second candidate cell from the plurality of candidate cells. After determining the second candidate cell, the first entity sends the first information, to indicate to release the second candidate cell.

In this embodiment of this application, all implementations related to the second candidate cell are applicable to one or more candidate cells that the first entity indicates to release, or are applicable to one or more other candidate cells than the first candidate cell that the first entity indicates to release. This is uniformly described herein, and details are not described in the following embodiments.

In a possible scenario, the serving entity or the source entity may send second information to the terminal device. The second information indicates to release configuration information of the second candidate cell. After receiving the second information, the terminal device may learn of a to-be-released candidate cell based on the second information, to release the second candidate cell.

In a possible implementation, when the first entity is a serving entity, the serving entity may send the second information to the terminal device after determining the second candidate cell from the plurality of candidate cells; or when the first entity is a source entity or the second candidate entity, the first entity may send the second information to the terminal device after receiving the first information from the source entity or the second candidate entity.

In another possible implementation, the source entity may send the second information to the terminal device when configuring a candidate cell for the terminal device. For example, the source entity sends configuration information of the first candidate cell to the terminal device, where the configuration information of the first candidate cell includes the second information. For example, when the source entity requests the configuration information of the first candidate cell from the second candidate entity, the second candidate entity may include, in the configuration information of the first candidate cell, identification information of a to-be-released cell (for example, the second candidate cell) corresponding to the first candidate cell, in other words, the second candidate entity may include the second information in the configuration information of the first candidate cell. Subsequently, when sending the configuration information of the first candidate cell to the terminal device, the source entity may include the second information in the configuration information of the first candidate cell. After subsequently accessing the first candidate cell by using the configuration information of the first candidate cell, the terminal device may learn that the configuration information of the second candidate cell needs to be released.

According to this solution, after determining that the terminal device accesses the first candidate cell, the first entity (namely, the serving entity, the source entity, or the candidate entity of the terminal device) may send the first information, to indicate to release one or more candidate cells. When the first entity sends the first information to a candidate entity to which a candidate cell that needs to be released belongs, the candidate entity can release, in a timely manner, a cell radio resource allocated to the terminal device, to avoid a case in which a cell radio resource cannot be allocated to another terminal device due to excessive occupation of the resource by the terminal device, thereby efficiently utilizing cell resources.

The communication method provided in this application is described as a whole above. The foregoing method is described in detail below separately by using an example in which the first entity is a serving entity, an example in which the first entity is a source entity, and an example in which the first entity is a candidate entity.

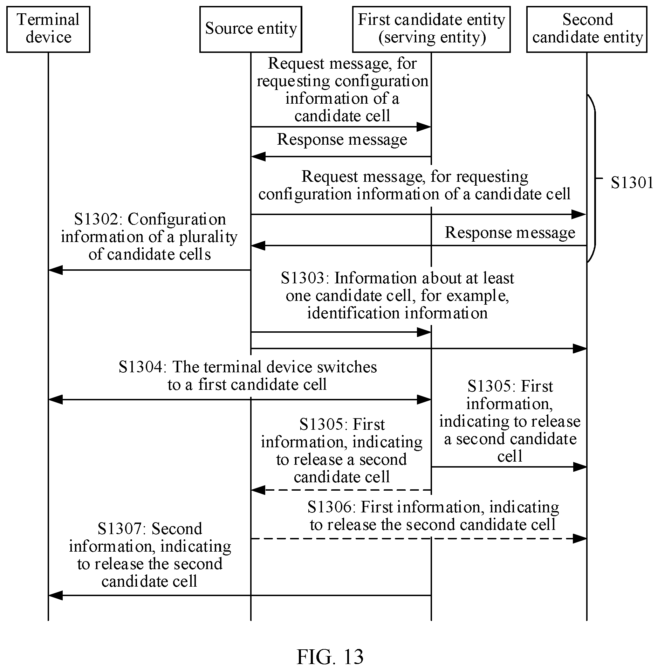

When the first entity is a serving entity and the serving entity is the first candidate entity, as shown in FIG. 13, a communication method provided in this application includes the following steps.

S1301: A source entity obtains configuration information about a plurality of candidate cells of a terminal device.

Optionally, before step S1301, the source entity may receive a measurement report from the terminal device, for example, a layer 3 (L3) measurement report, determine one or more candidate cells for the terminal device based on the measurement report, and initiate a handover procedure, to perform step S1301. The handover procedure initiated by the terminal device may be used for primary cell switch and/or primary secondary cell switch.

For example, the source entity may determine N candidate cells (namely, initial candidate cells) based on the measurement report reported by the terminal device, where N is an integer greater than or equal to 1. The N candidate cells may belong to M candidate entities, and M is a positive integer less than or equal to N. When M is less than N, it indicates that at least two candidate cells in the N candidate cells belong to a same candidate entity.

For ease of description, in the following embodiments of this application, the N candidate cells are collectively referred to as a candidate cell set 1, that is, the candidate cell set 1 includes the N candidate cells.

A candidate cell in the candidate cell set 1 is used as an example. After determining the candidate cell for the terminal device, the source entity may request, from the candidate entity, configuration information of the candidate cell for the terminal device. For example, the source entity may send a request message to the candidate entity to request the configuration information of the candidate cell, where the configuration information of the candidate cell may also be referred to as RRC configuration information of the candidate cell. The configuration information of the candidate cell may be used by the terminal device to access the candidate cell, for example, the configuration information of the candidate cell includes identification information of the candidate cell and configuration parameter information of the candidate cell. The request message may include identification information of the terminal device and the identification information of the candidate cell. The identification information of the terminal device may be an inter-station (Xn) application protocol (application protocol, AP) identifier, namely, an XnAP ID allocated by the source entity to the terminal device. For the identification information of the candidate cell, refer to the related descriptions in step S1201. Details are not described herein again.

For example, the configuration parameter information of the candidate cell may include but is not limited to at least one of the following: a cell radio network temporary identifier (cell radio network temporary identifier, C-RNTI) allocated by the candidate cell to the terminal device, a random access channel (random access channel, RACH) resource, a security-related algorithm of the candidate cell, or the like.

After the candidate entity receives the request from the source entity, if the candidate entity allows the terminal device to access the candidate cell or agrees to prepare the candidate cell for the terminal device, the candidate entity sends a response message to the source entity. The response message may include the configuration information of the candidate cell, and may further include identification information allocated by the candidate entity to the terminal device, for example, an XnAP ID allocated by the candidate entity to the terminal device. After receiving the configuration information of the candidate cell, the source entity may directly transparently transmit the configuration information to the terminal device without parsing the configuration information.

For example, when the source entity requests the configuration information of the plurality of candidate cells in one request message, the response message sent by the candidate entity may include an identifier of a candidate cell and configuration information of the candidate cell, or a candidate cell identifier set/list and a corresponding candidate cell configuration set/list. When the source entity requests configuration information of one candidate cell in one request message, the response message sent by the candidate entity may include configuration information. In this case, the configuration information in the response message is the configuration information of the candidate cell requested by the source entity.

After the candidate entity receives the request message from the source entity, if the candidate entity does not allow the terminal device to access the candidate cell or does not agree to prepare the candidate cell for the terminal device, the candidate entity does not send the configuration information of the candidate cell to the source entity.

Therefore, a quantity of configuration information of candidate cells obtained by the source entity may be less than or equal to N. In other words, in step S1301, the source entity obtains configuration information of a part or all of the candidate cells in the candidate cell set 1. For ease of description, in the following embodiments of this application, one or more candidate cells whose configuration information is obtained by the source entity are collectively referred to as a candidate cell set 2, and the candidate cell set 2 is a subset of the candidate cell set 1. A candidate cell in the candidate cell set 2 may also be understood as a candidate cell prepared by the candidate entity for the terminal device.

Optionally, in a continuous CHO scenario, the request message may be a handover request message, and correspondingly, the response message may be a handover request response message; in a continuous CPAC scenario, the request message may be an SN addition request message, and correspondingly, the response message may be an SN addition request acknowledge message; or in a continuous LTM scenario, the request message may be a message used to request a candidate cell, and correspondingly, the response message may be a message used to respond to the candidate cell request.

Optionally, the request message sent by the source entity may be at a cell granularity. To be specific, the source entity may send one request message for each of the N candidate cells. Alternatively, the request message may be at a candidate entity granularity. To be specific, the source entity may send one request message for each of the M candidate entities. In this scenario, if at least two candidate cells belong to a same candidate entity, the source entity sends one request message to the candidate entity, where the request message is used to request configuration information of the at least two candidate cells.

Optionally, for a candidate entity that receives the request message, a response message sent by the candidate entity may be at a cell granularity, or may be at a candidate entity granularity. For details, refer to the related descriptions of the request message. The details are not described herein again.

For ease of description, in this embodiment of this application, descriptions are provided by using an example in which the candidate cell set 2 includes a first candidate cell and a second candidate cell, to be specific, the source entity obtains configuration information of the first candidate cell and configuration information of the second candidate cell of the terminal device, the first candidate cell belongs to a first candidate entity, and the second candidate cell belongs to a second candidate entity.

In a possible implementation, configuration information of a candidate cell sent by the candidate entity to the source entity may include identification information of a to-be-released cell corresponding to the candidate cell. After subsequently accessing the candidate cell by using the configuration information of the candidate cell, the terminal device may release the to-be-released cell. For example, a to-be-released cell corresponding to a candidate cell may not be a neighboring cell of the candidate cell. In other words, when configuring a candidate cell for the terminal device, the candidate entity may preconfigure a to-be-released cell corresponding to the candidate cell, namely, a cell that needs to be released after the terminal device accesses the candidate cell.

Optionally, the configuration information of the first candidate cell sent by the first candidate entity to the source entity may include information about the second candidate cell, where the second candidate cell is a to-be-released cell corresponding to the first candidate cell. Configuration information of another candidate cell in the candidate cell set 2 may also include identification information of a to-be-released cell corresponding to the candidate cell, and different candidate cells may correspond to different to-be-released cells.

S1302: The source entity sends configuration information of a plurality of candidate cells (candidate cells in the candidate cell set 2) to the terminal device. Correspondingly, the terminal device receives the configuration information of the plurality of candidate cells from the source entity.

Optionally, the source entity may send an RRC reconfiguration message to the terminal device, where the RRC reconfiguration message carries the configuration information of the plurality of candidate cells. In addition, in the continuous CHO or continuous CPAC scenario, the source entity may further send, to the terminal device, a handover trigger condition or an execution trigger condition corresponding to each of the plurality of candidate cells.

S1303: The source entity sends information about at least one candidate cell of the terminal device to at least one candidate entity. Correspondingly, the candidate entity receives the information about the at least one candidate cell of the terminal device from the source entity. For ease of description, in the following embodiments of this application, the at least one candidate cell is collectively referred to as a candidate cell set 3, that is, the candidate cell set 3 includes the at least one candidate cell.

In a first possible implementation, the candidate cell set 3 is the same as the candidate cell set 2. In addition, after step S1301, the source entity may separately send information about the candidate cell set 2 to a candidate entity to which at least one candidate cell in the candidate cell set 2 belongs.

For example, the candidate cell set 2 includes the first candidate cell and the second candidate cell, the first candidate cell belongs to the first candidate entity, and the second candidate cell belongs to the second candidate entity. In step S1303, the source entity may send information about the first candidate cell and the information about the second candidate cell to the first candidate entity, and send the information about the first candidate cell and the information about the second candidate cell to the second candidate entity.

In a second possible implementation, the candidate cell set 3 includes a part of candidate cells in the candidate cell set 2. In addition, after step S1301, the source entity may separately send information about a part of candidate cells in the candidate set 2 to a candidate entity to which at least one candidate cell in the candidate cell set 2 belongs, where the part of candidate cells is a cell of another candidate entity than the receiving candidate entity.

For example, the candidate cell set 2 includes the first candidate cell and the second candidate cell, the first candidate cell belongs to the first candidate entity, and the second candidate cell belongs to the second candidate entity. In step S1303, the second candidate cell is not a cell of the first candidate entity, and therefore, the source entity may send the information about the second candidate cell to the first candidate entity; and the first candidate cell is not a cell of the second candidate entity, and therefore, the source entity may send information about the first candidate cell to the second candidate entity. In this scenario, because the first candidate cell is a cell of the first candidate entity, and the first candidate entity sends the configuration information of the first candidate cell to the source entity in step S1301, the first candidate entity may determine that the candidate cells of the terminal device include the first candidate cell and the second candidate cell. Similarly, the second candidate entity may determine that the candidate cells of the terminal device include the first candidate cell and the second candidate cell.

It should be noted that, in the first and second possible implementations, there is no strict sequence between step S1302 and step S1303. Step S1302 may be performed before step S1303, or step S1303 may be performed before step S1302, or step S1302 and step S1303 may be simultaneously performed. This is not specifically limited in this application.

In a third possible implementation, in the continuous CPAC scenario, after step S1302, if a trigger condition of a candidate cell (for example, the first candidate cell) is met, the terminal device may indicate identification information of the first candidate cell to an MN (the source entity), and the MN (the source entity) sends, in step S1303, information about each candidate cell in the candidate cell set 3 to the first candidate entity (that is, a candidate SN, also referred to as a target entity, or referred to as a serving entity after the terminal device completes access). In this scenario, the candidate cell set 3 and the candidate cell set 2 may be the same, or the candidate cell set 3 includes a part of candidate cells in the candidate cell set 2, where the part of candidate cells is a cell of another candidate entity than the serving entity.

In the first, second, and third possible implementations, it may be considered that separate step S1303 exists, in other words, step S1301 and step S1303 are two independent steps.

In a fourth possible implementation, step S1303 and step S1301 may be a same step, that is, it may be considered that separate step S1303 does not exist. For example, when requesting a candidate cell from the candidate entity in step S1301, the source entity may send information about the N candidate cells in the candidate cell set 1 to the candidate entity. In this case, it may be considered that the candidate cell set 3 is the same as the candidate cell set 1. Alternatively, the source entity may send information about a part of candidate cells in the candidate cell set 1 to the candidate entity, where the part of candidate cells is a candidate cell of the corresponding receiving candidate entity. In this case, it may be considered that the candidate cell set 3 includes the part of candidate cells in the candidate cell set 1.

For example, the candidate cell set 1 includes the first candidate cell and the second candidate cell, the first candidate cell belongs to the first candidate entity, and the second candidate cell belongs to the second candidate entity. The source entity may send information about the first candidate cell and the information about the second candidate cell to the first candidate entity, or send information about the first candidate cell to the first candidate entity but not send the information about the second candidate cell. In addition, the source entity may send the information about the first candidate cell and the information about the second candidate cell to the second candidate entity, or send the information about the second candidate cell to the second candidate entity but not send the information about the first candidate cell.

In a possible implementation, step S1303 may be understood as an implementation in which the first entity obtains the information about the plurality of candidate cells of the terminal device in step S1201. In other words, when the first entity is the first candidate entity, that the first entity obtains the information about the plurality of candidate cells of the terminal device in step S1201 may include: The first candidate entity receives information about one or more candidate cells from the source entity. The one or more candidate cells are candidate cells in the candidate cell set 3.

In a possible implementation, information about a candidate cell includes identification information of the candidate cell. For the identification information of the candidate cell, refer to the related descriptions in step S1201. Details are not described herein again.

In a possible implementation, in step S1303, in addition to the information about the candidate cell, the source entity may further send, to the candidate entity, one or more of identification information allocated by the source entity to the terminal device, identification information of the source entity, and identification information allocated by the candidate entity to the terminal device. The one or more pieces of information may indicate that the candidate cell is a candidate cell of the terminal device.

For example, in the continuous CHO scenario, the source entity is a source base station, and the candidate entity is a candidate base station; in the continuous CPAC scenario, the source entity is an MN, and the candidate entity is a candidate SN; or in the continuous inter-CU LTM scenario, the source entity is a source CU, and the candidate entity is a candidate CU. In this case, the identification information allocated by the source entity to the terminal device and the identification information allocated by the candidate entity to the terminal device may be XnAP IDs. In the continuous CPCA scenario, an MN or an SN may determine to configure one or more candidate PSCells for the terminal device, and the MN requests a candidate SN to allocate a candidate PSCell to the terminal device. In this case, the source entity may be the MN, and correspondingly, the candidate entity is the candidate SN.

Alternatively, for example, in the continuous intra-CU LTM scenario, when the source entity is a CU and the candidate entity is a DU, candidate DUs are managed by a same CU (namely, the source entity), and the identification information allocated by the source entity to the terminal device and the identification information allocated by the candidate entity to the terminal device may be F1AP IDs.

Optionally, when the source entity is a CU and the candidate entity is a candidate CU, after receiving information about a plurality of candidate cells, the candidate CU may send the information about the plurality of candidate cells to a first DU managed by the candidate CU, to request the first DU to allocate a candidate cell to the terminal device. A cell managed by the first DU includes at least one of the plurality of candidate cells.

Optionally, when the source entity is a CU and the candidate entity is a candidate CU, that a candidate cell belongs to the candidate entity may be understood as that the candidate cell belongs to a DU managed by the candidate CU.

S1304: The terminal device switches to (or accesses) the first candidate cell. The first candidate entity determines that the terminal device switches to the first candidate cell.

In a possible implementation, for example, in the continuous CHO or continuous CPAC scenario, after receiving the configuration information of the plurality of candidate cells, the terminal device may determine whether trigger conditions corresponding to the candidate cells are met. If a trigger condition of a candidate cell is met, configuration information of the candidate cell is used for access to the candidate cell. For example, the terminal device may access the candidate cell in a random access manner, a random access-less manner, or another access manner. This is not limited. In this embodiment of this application, descriptions are provided by using an example in which the trigger condition corresponding to the first candidate cell is met, and the terminal device successfully accesses the first candidate cell.

In another possible implementation, for example, in the continuous LTM scenario, after receiving the configuration information of the plurality of candidate cells, the terminal device may measure the plurality of candidate cells, and report a layer 1 measurement result for the candidate cells; and the source serving entity indicates the terminal device to perform switching (cell switch) to the first candidate cell. For example, the source serving entity may indicate configuration identification information of the first candidate cell or the identification information of the first candidate cell. After receiving the indication, the terminal device uses the first candidate cell as a target cell, and accesses the target cell.

For example, the terminal device may access the target cell in a random access manner; and if random access is completed, it is considered that the terminal device successfully switches to or successfully accesses the first candidate cell. Alternatively, the terminal device may access the target cell in a random access-less manner. For example, when indicating the terminal device to switch to the first candidate cell, the source serving entity may indicate, to the terminal device, the configuration identification information, a TA, uplink/downlink beam information for data transmission, and the like of the first candidate cell. The terminal device may perform uplink transmission/downlink reception based on the obtained TA and beam information of the target cell. In this case, if the terminal device performs first uplink transmission or downlink reception on a beam indicated by the source serving entity, it is considered that the terminal device successfully switches to or successfully accesses the first candidate cell.

It may be understood that after step S1304, a serving cell of the terminal device is the first candidate cell, and a serving entity is the first candidate entity. After the terminal device successfully switches to/successfully accesses the first candidate cell, the first candidate entity may determine that the terminal device switches to/accesses the first candidate cell of the first candidate entity.

Optionally, when the source entity is a CU and the first candidate entity is a candidate CU, that the first candidate entity determines that the terminal device switches to the first candidate cell may include: The candidate CU receives an access success indication from a second DU, where the access success indication indicates that the terminal device switches to the first candidate cell. The second DU is a DU, to which the first candidate cell belongs, managed by the candidate CU.

Optionally, in the continuous CPCA scenario, if the third possible implementation is used in step S1303, it may be considered that step S1304 is performed before step S1303.

Optionally, after accessing the first candidate cell, the terminal device may perform measurement based on a measurement configuration, and send a measurement report to the first candidate entity. For example, the measurement configuration may be sent by the first candidate entity to the terminal device, or may be a measurement configuration that is sent by the source entity to the terminal device and that is stored by the terminal device, in other words, the terminal device continues to use the measurement configuration after accessing the first candidate cell. This is not specifically limited in this application.

S1305: The serving entity sends first information based on information about one or more candidate cells.

The first information indicates to release the second candidate cell. For example, the first information may indicate the information about the to-be-released second candidate cell. The serving entity may determine the second candidate cell from the one or more candidate cells, where the one or more candidate cells are candidate cells in the candidate cell set 3, and the second candidate cell is one or more of the plurality of candidate cells. For details, refer to the related descriptions in step S1203. The details are not described herein again.

In a possible implementation, when the information about the one or more candidate cells includes respective identification information of the one or more candidate cells (that is, when the information about the one or more candidate cells includes identification information of the second candidate cell), that the serving entity sends the first information based on the information about the one or more candidate cells may include: The serving entity determines, based on the respective identification information of the one or more candidate cells, to release the second candidate cell, and sends the first information after determining to release the second candidate cell.

For example, the serving entity may identify the one or more candidate cells based on the respective identification information of the one or more candidate cells. Then, the first candidate entity may determine a to-be-released cell based on the measurement report from the terminal device and/or radio resource management (radio resource management, RRM) report information, where the to-be-released cell includes the second candidate cell. For example, the to-be-released cell may also be understood as a cell that is not suitable for continuing to serve as a candidate cell of the terminal device. That a cell is not suitable for serving as a candidate cell of the terminal device may be understood as that load of the cell is excessively high, for example, a quantity of terminal devices accessing the cell exceeds a specific threshold; or signal quality of the cell is poor.

For example, the measurement report from the terminal device may indicate signal quality of each candidate cell. In this scenario, the to-be-released cell may be a cell whose signal quality is less than or equal to a threshold in the one or more candidate cells.

In another possible implementation, if the serving entity sends the configuration information of the first candidate cell to the source entity in step S1301, and the configuration information of the first candidate cell includes information about a to-be-released cell corresponding to the first candidate cell, the serving entity determines the to-be-released cell in the configuration information as the second candidate cell.

In a possible implementation, the first information may include the identification information of the second candidate cell. For the identification information of the cell, refer to the related descriptions in step S1201. Details are not described herein again. In addition, the serving entity may further send at least one of the following: identification information allocated by the source entity to the terminal device, identification information allocated by the second candidate entity to the terminal device, or identification information of the source entity. The at least one piece of information and the first information may be carried in a same message for sending. Alternatively, the at least one piece of information may be understood as information in the first information, that is, the first information further includes at least one of identification information allocated by the terminal device, the identification information allocated by the second candidate entity to the terminal device, or the identification information of the source entity.

In a possible implementation, the serving entity may send the first information to the source entity. Correspondingly, the source entity receives the first information from the serving entity, and the source entity sends, to the second candidate entity based on the first information, an indication for releasing the second candidate cell, for example, performs the following step S1306. Alternatively, the serving entity may send the first information to the second candidate entity. For example, when determining that there is an interface (for example, an Xn interface, an X2 interface, or an F1 interface) between the serving entity and the second candidate entity, the serving entity sends the first information to the second candidate entity. The second candidate entity is an entity to which the second candidate cell belongs. Correspondingly, the second candidate entity receives the first information from the source entity, and determines, based on the first information, the second candidate cell to be released for the terminal device. In other words, the serving entity may indicate, through the source entity, the entity to which the second candidate cell belongs to release the second candidate cell, or may directly indicate the entity to which the second candidate cell belongs to release the second candidate cell.

S1306: The source entity sends first information to the second candidate entity. Correspondingly, the second candidate entity receives the first information from the source entity.

The first information sent by the source entity to the second candidate entity indicates to release the second candidate cell, in other words, the first information indicates to release a resource of the second candidate cell allocated to the terminal device.

Optionally, the first information sent by the source entity to the second candidate entity may be the same as or different from content carried in the first information that is received by the source entity from the first candidate entity in step S1305. That is, after receiving the first information from the first candidate entity, the source entity may convert the information to obtain the first information sent to the second candidate entity. In other words, in this embodiment of this application, all information functioning as an indication for releasing a candidate cell may be understood as the first information.

Optionally, when the second candidate cell includes one or more cells, when sending the first information to the second candidate entity, the serving entity or the source entity may send first information at a cell granularity, that is, one candidate cell corresponds to one piece of first information, or send first information at a candidate entity granularity, that is, one candidate entity corresponds to one piece of first information.

For example, the second candidate cell includes a candidate cell 2, a candidate cell 3, and a candidate cell 4, the candidate cell 2 belongs to a candidate entity 2, and the candidate cell 3 and the candidate cell 4 belong to a candidate entity 3. The serving entity or the source entity may send three pieces of first information, respectively indicating to release the candidate cell 2, the candidate cell 3, and the candidate cell 4. Alternatively, the serving entity or the source entity may send two pieces of first information, where one piece of first information indicates to release the candidate cell 2, and the other piece of first information indicates to release the candidate cell 3 and the candidate cell 4.

Optionally, after receiving the first information from the serving entity or the source entity, the second candidate entity may identify, based on the first information, a terminal device and a second candidate cell corresponding to the terminal device, to release a resource of the second candidate cell allocated to the terminal device. Subsequently, the resource may be allocated to another terminal device.

In a possible implementation, if the second candidate cell is a serving cell of the serving entity, step S1305 and step S1306 may not be performed.

In a possible implementation, after step S1304, the communication method may further include the following step S1307:

S1307: The serving entity sends second information to the terminal device. Correspondingly, the terminal device receives the second information from the serving entity. The second information indicates to release the second candidate cell, or indicates to release the configuration information of the second candidate cell.

For example, the second information may include the identification information of the second candidate cell. The terminal device may learn of a to-be-released candidate cell based on the second information, to release the second candidate cell.

In a possible implementation, that the terminal device releases the second candidate cell may be understood as that the terminal device releases (or deletes or discards) the configuration information of the second candidate cell. For example, the configuration information of the second candidate cell may be sent by the source entity to the terminal device in step S1302. In step S1302, when the source entity configures a corresponding execution trigger condition for the second candidate cell, the terminal device may further release (or delete or discard) the execution trigger condition corresponding to the second candidate cell.

In another possible implementation, that the terminal device releases the second candidate cell may be understood as that the terminal device deactivates (or disables) the second candidate cell. For example, the configuration information of the second candidate cell is retained, but whether the second candidate cell can be used as a target cell in a subsequent handover process is not further evaluated, or the second candidate cell is not measured.

In a possible implementation, in the continuous CPAC scenario, after step S1304, the source entity sends the second information to the terminal device. Correspondingly, the terminal device receives the second information from the source entity, learns of the to-be-released second candidate cell, and releases the second candidate cell. For details, refer to the related descriptions of step S1307. The details are not described herein again.

It should be noted that there is no strict sequence between step S1307 and step S1305. Step S1307 may be performed before step S1305, or step S1305 may be performed before step S1307, or step S1305 and step S1307 may be simultaneously performed. This is not specifically limited in this application.

In another possible implementation, if the configuration information of the first candidate cell in step S1302 includes information about a to-be-released cell (namely, the second candidate cell) corresponding to the first candidate cell, after step S1304, the terminal device may learn of the to-be-released cell when using configuration information of the target cell, to release the second candidate cell. In addition, in this implementation, step S1307 may not be performed.

According to this solution, the serving entity sends the second information to the terminal device to indicate the terminal device to release the second candidate cell; or the terminal device learns of information about a to-be-released candidate cell (namely, the second candidate cell) when using the configuration information of the target cell, so that the terminal device can release or deactivate the configuration information of the second candidate cell, and does not further evaluate whether the second candidate cell can be used as a target cell in a subsequent handover process, to reduce determining complexity and power consumption of the terminal device.

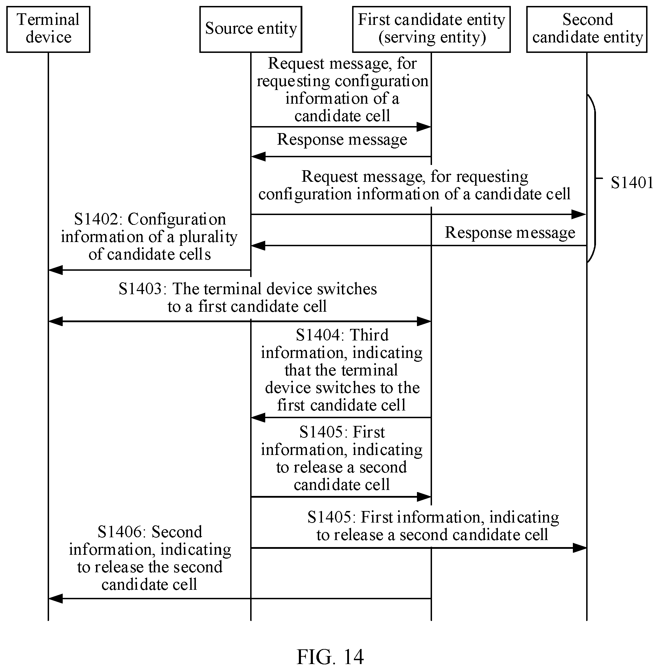

In some implementation scenarios, when the first entity is a source entity, as shown in FIG. 14, a communication method provided in this application includes the following steps.

S1401: The source entity obtains configuration information of a plurality of candidate cells of a terminal device.

When the first entity is a source entity, that the first entity obtains the information about the plurality of candidate cells of the terminal device in step S1201 may be understood as that the source entity obtains the configuration information of the plurality of candidate cells of the terminal device. For a specific implementation, refer to the related descriptions in step S1301.

In a possible implementation, when obtaining the configuration information of the plurality of candidate cells of the terminal device, the source entity may determine identification information of the plurality of candidate cells of the terminal device. For details, refer to the related descriptions in step S1301. The details are not described herein again.

S1402: The source entity sends the configuration information of the plurality of candidate cells to the terminal device. For details, refer to the related descriptions in step S1302. The details are not described herein again.

S1403: The terminal device switches to (or accesses) a first candidate cell. A first candidate entity determines that the terminal device switches to the first candidate cell. For details, refer to the related descriptions in step S1304. The details are not described herein again.

S1404: The first candidate entity sends third information to the source entity. Correspondingly, the source entity receives the third information from the first candidate entity.

In a possible implementation, the third information indicates that the terminal device (successfully) switches to/accesses the first candidate entity, or further, the third information indicates that the terminal device switches to/accesses the first candidate cell. For example, the third information may include identification information of the first candidate cell.

In this scenario, after receiving the third information, the source entity may learn that a serving entity of the terminal device is the first candidate entity. In addition, the source entity may further learn that a serving cell of the terminal device is the first candidate cell, that is, the source entity may determine that the terminal device switches to/accesses the first candidate cell of the first candidate entity.

In other words, when the first entity is a source entity, that the first entity determines that the terminal device switches to the first candidate cell of the first candidate entity in step S1201 includes: The source entity receives the third information from the first candidate entity, and determines, based on the third information, that the terminal device switches to the first candidate cell of the first candidate entity.

S1405: The source entity sends first information based on information about one or more candidate cells.

The first information indicates to release a second candidate cell, and the second candidate cell is one or more of the one or more candidate cells. The one or more candidate cells may be candidate cells in a candidate cell set 2. For example, the first information may indicate information about the to-be-released second candidate cell. For details, refer to the related descriptions in step S1203. The details are not described herein again.

In a possible implementation, after determining that the terminal device switches to a candidate cell, the source entity sends the first information to indicate to release a part or all of the candidate cells.

Determining of the second candidate cell is described as follows.

In a possible implementation, the source entity may determine the second candidate cell from the one or more candidate cells. For example, when the information about the one or more candidate cells includes respective identification information of the one or more candidate cells, that the source entity sends the first information based on the information about the one or more candidate cells may include: The source entity determines, based on the respective identification information of the one or more candidate cells, to release the second candidate cell, and sends the first information after determining to release the second candidate cell.

For example, the source entity may identify the one or more candidate cells based on the respective identification information of the one or more candidate cells. Then, the source entity determines the second candidate cell based on information about a neighboring cell of the serving cell (namely, the first candidate cell). For example, the second candidate cell may not be a neighboring cell of the first candidate cell.

Alternatively, for example, the source entity may identify the one or more candidate cells based on the respective identification information of the one or more candidate cells. Then, the second candidate cell is determined based on a preset quantity of times of switching and/or a timer.

In a first possible implementation, each of the plurality of candidate cells of the terminal device corresponds to one preset quantity of times of switching. When a quantity of times the terminal device switches to a candidate cell is greater than or equal to a preset quantity of times of switching corresponding to the candidate cell, the source entity determines to release the candidate cell (namely, the second candidate cell).

For example, a candidate cell 2 is used as an example. Each time the terminal device switches to the candidate cell 2, a candidate entity to which the candidate cell 2 belongs may indicate to the source entity that the terminal device switches to the candidate cell 2, so that the source entity collects statistics on a quantity of times the terminal device switches to the candidate cell 2. Alternatively, the source entity and the candidate entity may agree on a preset quantity of times of switching corresponding to the candidate cell 2, and the candidate entity collects statistics on a quantity of times the terminal device switches to the candidate cell 2. When the quantity of times the terminal device switches to the candidate cell 2 is greater than or equal to the preset quantity of times of switching corresponding to the candidate cell 2, the candidate entity indicates to the source entity that the quantity of times the terminal device switches to the candidate cell 2 is greater than or equal to the preset quantity of times of switching corresponding to the candidate cell 2.

In a second possible implementation, the plurality of candidate cells of the terminal device may correspond to one preset quantity of times of switching. When a quantity of times of switching of the terminal device (or a sum of quantities of times the terminal device switches to all the candidate cells, without distinguishing between the candidate cells) is greater than or equal to the preset quantity of times of switching, the source entity determines to release all or a part of the candidate cells (namely, the second candidate cell) of the terminal device.

In a third possible implementation, each of the plurality of candidate cells of the terminal device corresponds to one timer. When a timer corresponding to a candidate cell expires or running time of the timer reaches a preset value, the source entity determines to release the candidate cell (namely, the second candidate cell).

In a fourth possible implementation, the plurality of candidate cells of the terminal device may correspond to one timer. When the timer expires or allowed time reaches a preset value, the source entity determines to release all or a part of the candidate cells (namely, the second candidate cell) of the terminal device.

For example, the timer may be started when the source entity receives the configuration information of the candidate cells that is sent by the candidate entity; the timer may be started when the source entity sends, to the terminal device, an RRC reconfiguration message that carries the configuration information of the plurality of candidate cells; the timer may be started when the source entity receives an RRC reconfiguration complete message from the terminal device; or the timer may be started after the terminal device completes a 1^{st} handover. The 1^{st} handover may be performed after the source entity sends the configuration information of the plurality of candidate cells to the terminal device.

Optionally, the preset quantity of times of switching, duration of the timer, or the preset value may be defined in a protocol, may be determined by the source entity, or may be negotiated by the source entity and the candidate entity. This is not specifically limited in this application.

In another possible implementation, the source entity may obtain the information about the second candidate cell from another entity. For example, in a continuous CPAC scenario, a source SN may determine the second candidate cell, and then send the information about the second candidate cell to the source entity.

In a possible implementation, the first information may include identification information of the second candidate cell. For the identification information of the candidate cell, refer to the related descriptions in step S1201. Details are not described herein again.

In a possible implementation, in step S1405, the source entity may send the first information to a second candidate entity. In addition, the source entity may further send at least one of the following to the second candidate entity: identification information allocated by the source entity to the terminal device, identification information allocated by the second candidate entity to the terminal device, or identification information of the source entity. For details, refer to the related descriptions in step S1306. The details are not described herein again.

In a possible implementation, in step S1405, the source entity may further send the first information to the serving entity (namely, the first candidate entity). In this case, the method may further include the following step S1406:
S1406: The serving entity sends second information to the terminal device. Correspondingly, the terminal device receives the second information from the serving entity. The second information indicates to release the second candidate cell. For details, refer to the related descriptions in step S1307. The details are not described herein again.

In another possible implementation, in step S1405, the source entity may not send the first information to the serving entity, and step S1406 may not be performed. In this case, the source entity sends the second information to the terminal device. For example, in the continuous CPAC scenario, when an MN serves as the source entity, after configuring configuration information of one or more candidate cells for the terminal device in step S1402, the MN may send the second information to the terminal device to indicate the terminal device to release the second candidate cell.

In still another possible implementation, the source entity may send the second information to the terminal device in step S1402, that is, configuration information of the first candidate cell may include the second information, in other words, the configuration information of the first candidate cell may include the information about the second candidate cell. After step S1403, when using configuration information of a target cell, the terminal device may learn of a to-be-released candidate cell, in other words, the terminal device may learn of the information about the second candidate cell, to release the second candidate cell. For details, refer to the related descriptions in the method shown in FIG. 13. The details are not described herein again.

According to this solution, after determining that the terminal device accesses the first candidate cell, the source entity may send the first information, to indicate to release one or more other candidate cells. When the source entity sends the first information to a candidate entity to which a candidate cell that needs to be released belongs, the candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources.

In addition, the source entity sends the first information to the serving entity, so that the serving entity can send the second information to the terminal device to indicate the terminal device to release the second candidate cell. In this way, the terminal device releases or deactivates configuration information of the second candidate cell, and does not further evaluate whether the second candidate cell can be used as a target cell in a subsequent handover process, to reduce determining complexity and power consumption of the terminal device.

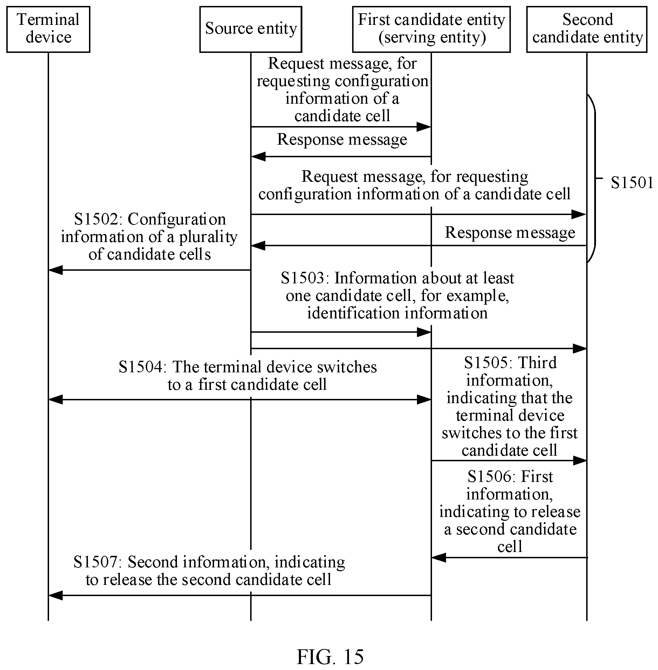

In some implementation scenarios, when the first entity is a candidate entity, and the candidate entity is not a serving entity, as shown in FIG. 15, a communication method provided in this application includes the following steps.

S1501: A source entity obtains configuration information of a plurality of candidate cells of a terminal device.

S1502: The source entity sends the configuration information of the plurality of candidate cells to the terminal device.

S1503: The source entity sends information about at least one candidate cell of the terminal device to at least one candidate entity. Correspondingly, the candidate entity receives the information about the at least one candidate cell of the terminal device from the source entity.

S1504: The terminal device switches to (or accesses) a first candidate cell. A first candidate entity determines that the terminal device switches to the first candidate cell.

For implementations of steps S1501 to S1504, refer to the related descriptions in step S1301 to S1304. Details are not described herein again.

S1505: A serving entity (namely, the first candidate entity) sends third information to a second candidate entity. Correspondingly, the second candidate entity receives the third information from the first candidate entity.

For an implementation of the third information, refer to the related descriptions of the third information in step S1404. For an implementation after the second candidate entity receives the third information, refer to the implementation after the source entity receives the third information in step S1404. Details are not described herein again.

S1506: The second candidate entity sends first information based on information about one or more candidate cells.

The first information indicates to release a second candidate cell, and the second candidate cell is one or more of the one or more candidate cells. The one or more candidate cells may be candidate cells in a candidate cell set 3. The second candidate entity may determine the second candidate cell from the one or more candidate cells.

In a possible implementation, after determining that the terminal device switches to a candidate cell, the second candidate entity sends the first information to indicate to release a part or all of other candidate cells.

In a possible implementation, when the information about the one or more candidate cells includes respective identification information of the one or more candidate cells, that the second candidate entity sends the first information based on the information about the one or more candidate cells may include: The second candidate entity determines, based on the respective identification information of the one or more candidate cells, to release the second candidate cell, and sends the first information after determining to release the second candidate cell.

In a possible implementation, the second candidate entity may identify the one or more candidate cells based on the respective identification information of the one or more candidate cells. Then, a to-be-released cell is determined based on a preset quantity of times of switching and/or a timer. For details, refer to the related implementation in which the source entity determines the to-be-released cell in step S1405. The details are not described herein again.

In another possible implementation, the second candidate entity may identify, from the one or more candidate cells, at least one candidate cell of the second candidate entity based on the identification information of the one or more candidate cells. Then, based on a load status of the at least one candidate cell, the second candidate cell is determined to be released. For example, when load of the second candidate cell is greater than or equal to a load threshold, the second candidate cell is determined to be released.

In another possible implementation, the source entity may identify the one or more candidate cells based on the respective identification information of the one or more candidate cells. Then, the source entity determines the second candidate cell based on information about a neighboring cell of the serving cell (namely, the first candidate cell). For example, the second candidate cell may not be a neighboring cell of the first candidate cell.

In a possible implementation, the second candidate entity may send the first information to the serving entity. In this case, the method may further include the following step S1507:
S1507: The serving entity sends second information to the terminal device. Correspondingly, the terminal device receives the second information from the serving entity. The second information indicates to release the second candidate cell. For details, refer to the related descriptions in step S1307. The details are not described herein again.

Optionally, when the second candidate cell determined by the second candidate entity includes a cell (denoted as a candidate cell 3) in a third candidate entity, the second candidate entity may further send the first information to the third candidate entity to indicate to release the candidate cell 3. Alternatively, the second candidate entity may further send information to the source entity to indicate to release the candidate cell 3, and then the source entity indicates the third candidate entity to release the candidate cell 3.

In a possible implementation, in a continuous CPAC scenario, the second candidate entity may send the first information to the source entity. In this case, the method may further include the following step S1507' (not shown in FIG. 15):
S1507': The source entity sends the second information to the terminal device. Correspondingly, the terminal device receives the second information from the source entity. For details, refer to the related descriptions in step S1307. The details are not described herein again.

According to this solution, after determining that the terminal device accesses the first candidate cell, the second candidate entity sends the first information to the first candidate entity, so that the first candidate entity can send the second information to the terminal device to indicate the terminal device to release the second candidate cell. In this way, the terminal device releases or deactivates configuration information of the second candidate cell, and does not further evaluate whether the second candidate cell can be used as a target cell in a subsequent handover process, to reduce determining complexity and power consumption of the terminal device.

In addition, the second candidate entity sends information to indicate to release another to-be-released cell, so that a candidate entity to which the to-be-released cell belongs releases, in a timely manner, a cell radio resource reserved for the terminal device, to avoid a case in which a cell radio resource cannot be allocated to another terminal device due to excessive occupation of the resource by the terminal device, thereby efficiently utilizing cell resources.

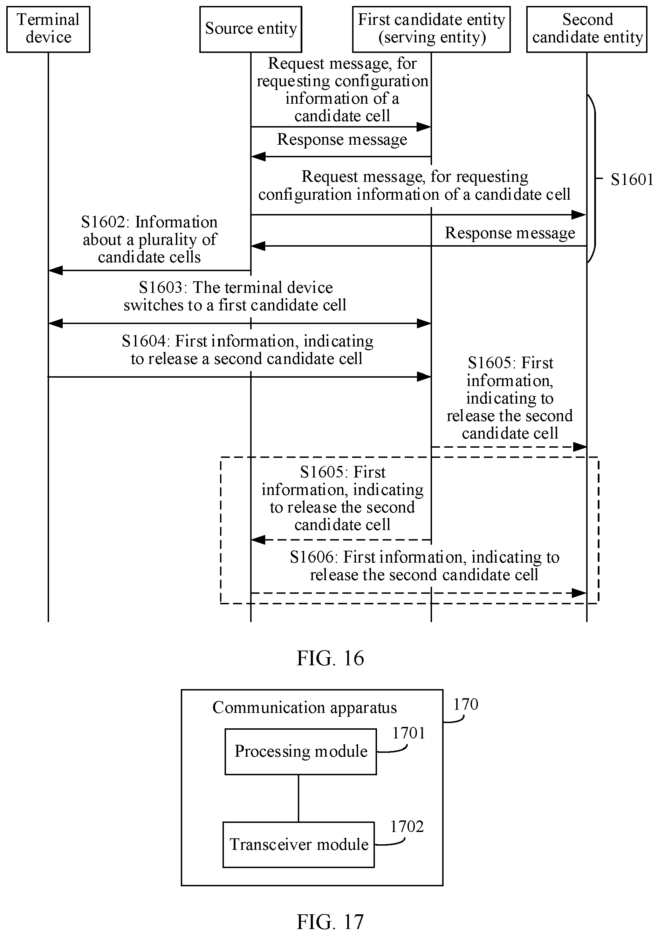

In the foregoing solution, a network side indicates to release a candidate cell. In addition, this application further provides a communication method, where a terminal device may indicate to release a candidate cell. As shown in FIG. 16, the communication method includes the following steps.

S1601: A source entity obtains information about a plurality of candidate cells of a terminal device.

In a possible implementation, the information about the plurality of candidate cells is configuration information of the plurality of candidate cells, and the source entity may also obtain respective identification information of the plurality of candidate cells when obtaining the configuration information of the plurality of candidate cells. For an implementation of step S1601, refer to the related descriptions in step S1301. Details are not described herein again.

S1602: The source entity sends the information of the plurality of candidate cells to the terminal device. For details, refer to the related descriptions in step S1302. The details are not described herein again.

S1603: The terminal device switches to (or accesses) a first candidate cell. For details, refer to the related descriptions in step S1304. The details are not described herein again.

S1604: The terminal device sends first information to a serving entity. Correspondingly, the serving entity receives the first information from the terminal device.

In a possible implementation, in a continuous CPAC scenario, step S1604 may be replaced with the following: The terminal device sends the first information to the source entity. Correspondingly, the source entity receives the first information from the terminal device.

The first information indicates to release a second candidate cell, and the second candidate cell is one or more of the plurality of candidate cells. For details, refer to the related descriptions in step S1203. The details are not described herein again.

In a possible implementation, when the information about the plurality of candidate cells includes the respective configuration information or identification information of the plurality of candidate cells, the terminal device identifies the plurality of candidate cells based on the configuration information or the identification information of the plurality of candidate cells. Then, the terminal device determines, based on a cell release condition, a cell that is not suitable for continuing to serve as a candidate cell of the terminal device, that is, determines a to-be-released cell, and sends information to a first candidate entity to indicate the to-be-released cell.

For example, the cell release condition may be configured by the source entity for the terminal device, may be predefined in a protocol, or may be determined by the terminal device. This is not specifically limited in this application.

Optionally, when the source entity configures the cell release condition for the terminal device, the communication method further includes: The source entity sends second information to the terminal device. Correspondingly, the terminal device receives the second information from the source entity. The second information indicates a condition for releasing the second candidate cell. The second information may further indicate a condition for releasing another candidate cell.

For example, the second information and the configuration information of the plurality of candidate cells may be carried in a same message, or the second information and the configuration information of the plurality of candidate cells may be carried in different messages. This is not specifically limited in this application.

In a possible implementation, the second information may include information indicating a timer and/or a maximum quantity of times of switching that correspond/corresponds to the second candidate cell.

In a first possible implementation, the second information may include information indicating a timer and/or a maximum quantity of times of switching that correspond/corresponds to each of the plurality of candidate cells. In other words, each of the plurality of candidate cells of the terminal device corresponds to one timer and/or a maximum quantity of times of switching.

When a quantity of times the terminal device switches to a candidate cell is greater than or equal to a maximum quantity of times of switching corresponding to the candidate cell, and/or a timer corresponding to the candidate cell expires or running time of the timer reaches a preset value, the terminal device determines to release the candidate cell, that is, the second candidate cell includes the candidate cell.

For example, the terminal device may maintain one counter for each of the plurality of candidate cells. For example, the terminal device maintains a counter 1 for a candidate cell 1, and maintains a counter 2 for a candidate cell 2. Each time the terminal device switches to a candidate cell, a counter corresponding to the candidate cell increases by 1. When a value of the counter reaches a maximum quantity of times of switching corresponding to the candidate cell, the terminal device determines to release the candidate cell.

Alternatively, the terminal device may maintain one timer for each of the plurality of candidate cells. For example, the terminal device maintains a timer 1 for a candidate cell 1, and maintains a timer 2 for a candidate cell 2. When a timer corresponding to a candidate cell expires or running time of the timer reaches a preset value, the terminal device determines to release the candidate cell.

In a second possible implementation, the second information may include information indicating one timer and/or a maximum quantity of times of switching that correspond/corresponds to the plurality of candidate cells. In other words, the plurality of candidate cells of the terminal device correspond to a same timer and/or a same maximum quantity of times of switching.

When a quantity of times of switching of the terminal device is greater than or equal to the maximum quantity of times of switching, and/or the timer expires or running time of the timer reaches a preset value, the terminal device determines to release all or a part of the candidate cells of the terminal device, that is, the second candidate cell includes all or the part of the candidate cells of the terminal device.

For example, the terminal device may maintain one counter for the plurality of candidate cells. Each time the terminal device switches to a candidate cell, the counter increases by 1. When a value of the counter reaches the maximum quantity of times of switching, all or a part of the candidate cells of the terminal device is determined to be released. Alternatively, the terminal device may maintain one timer for the plurality of candidate cells. When the timer expires or the running time of the timer reaches the preset value, all the candidate cells of the terminal device are determined to be released.

In a possible implementation, the first information may include identification information of the second candidate cell. For the identification information of the candidate cell, refer to the related descriptions in step S1201. Details are not described herein again.

In a possible implementation, the terminal device may release the second candidate cell after determining the second candidate cell. For details, refer to the related descriptions in step S1307. The details are not described herein again.

In a possible implementation, when the terminal device sends the first information to the serving entity, the method may further include the following step S1605:
S1605: The serving entity sends the first information.

Optionally, the serving entity may send the first information to the source entity, and correspondingly, the source entity receives the first information from the serving entity. Alternatively, the serving entity may send the first information to a second candidate entity, and correspondingly, the second candidate entity receives the first information from the serving entity, where the second candidate entity is an entity to which the second candidate cell belongs. In addition, the serving entity may further send at least one of the following: identification information allocated by the source entity to the terminal device, identification information allocated by the second candidate entity to the terminal device, or identification information of the source entity. For details, refer to the related descriptions in step S1305. The details are not described herein again.

In another possible implementation, when the terminal device sends the first information to the source entity, or when the serving entity sends the first information to the source entity after receiving the first information from the terminal device, the method may further include the following step S1606:
S1606: The source entity sends first information to the second candidate entity. Correspondingly, the second candidate entity receives the first information from the source entity.

The first information sent by the source entity to the second candidate entity indicates to release the second candidate cell, in other words, the first information indicates to release a resource of the second candidate cell allocated to the terminal device. In addition, the source entity may further send at least one of the following: identification information allocated by the source entity to the terminal device, identification information allocated by the second candidate entity to the terminal device, or identification information of the source entity. For details, refer to the related descriptions in step S1306. The details are not described herein again.

Optionally, after receiving the first information, the second candidate entity may release, based on an indication of the first information, a resource of the second candidate cell reserved for the terminal device. Subsequently, the resource may be allocated to another terminal device.

According to this solution, the terminal device may send the first information to the first candidate entity, so that the first candidate entity can send information to the second candidate entity to indicate to release the second candidate cell. In this way, the second candidate entity can release, in a timely manner, a cell radio resource reserved for the terminal device, to avoid a case in which a cell radio resource cannot be allocated to another terminal device due to excessive occupation of the resource by the terminal device, thereby efficiently utilizing cell resources. In addition, the terminal device can release or deactivate configuration information of the second candidate cell, and does not further evaluate whether the second candidate cell can be used as a target cell in a subsequent handover process, to reduce determining complexity and power consumption of the terminal device.

It may be understood that, in the foregoing embodiments, the method and/or the steps implemented by the RAN entity may alternatively be implemented by a part (for example, a processor, a chip, a chip system, a circuit, a logical module, or software) that can be used in the RAN entity, and the method and/or the steps implemented by the terminal device may alternatively be implemented by a part (for example, a processor, a chip, a chip system, a circuit, a logical module, or software) that can be used in the terminal device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 17 is a diagram of a structure of a communication apparatus 170. The communication apparatus 170 includes a processing module 1701 and a transceiver module 1702. The communication apparatus 170 may be configured to implement a function of the RAN entity or the terminal device.

In some embodiments, the communication apparatus 170 may further include a storage module (not shown in FIG. 17), configured to store program instructions and data.

In some embodiments, the transceiver module 1702 may also be referred to as a transceiver unit, and is configured to implement a sending function and/or a receiving function. The transceiver module 1702 may include a transceiver circuit, a transceiver machine, a transceiver, or a communication interface.

In some embodiments, the transceiver module 1702 may include a receiving module and a sending module that are respectively configured to perform the receiving and sending steps performed by the RAN entity or the terminal device in the foregoing method embodiments, and/or configured to support another process of the technology described in this specification. The processing module 1701 may be configured to perform the processing (for example, determining) steps performed by the RAN entity or the terminal device in the foregoing method embodiments, and/or configured to support another process of the technology described in this specification.

When the communication apparatus 170 is configured to implement a function of the first entity,
the processing module 1701 is configured to obtain information about a plurality of candidate cells of a terminal device; the processing module 1701 is further configured to determine that the terminal device switches to a first candidate cell of a first candidate entity, where the first candidate cell is one of the plurality of candidate cells; and the transceiver module 1702 is configured to send first information based on the information about the plurality of candidate cells, where the first information indicates to release a second candidate cell, and the second candidate cell is one or more of the plurality of candidate cells.

Optionally, that the processing module 1701 is configured to obtain the information about the plurality of candidate cells of the terminal device includes: The processing module 1701 is configured to receive information about a plurality of candidate cells from a source entity through the transceiver module 1702.

Optionally, that the transceiver module 1702 is configured to send the first information includes: The transceiver module 1702 is configured to send the first information to a source entity or a second candidate entity, where the second candidate entity is an entity to which the second candidate cell belongs.

Optionally, the transceiver module 1702 is further configured to send second information to the terminal device, where the second information indicates to release configuration information of the second candidate cell.

Optionally, that the transceiver module 1702 is configured to send the second information to the terminal device includes: The transceiver module 1702 is configured to send configuration information of the first candidate cell to the terminal device, where the configuration information of the first candidate cell includes the second information, and the configuration information of the first candidate cell is used by the terminal device to access the first candidate cell.

Optionally, that the processing module 1701 is configured to determine that the terminal device switches to the first candidate cell of the first candidate entity includes: The processing module 1701 is configured to receive third information from the first candidate entity through the transceiver module 1702, where the third information indicates that the terminal device switches to the first candidate cell.

Optionally, that the transceiver module 1702 is configured to send the first information includes: The transceiver module 1702 is configured to send the first information to the first candidate entity.

When the communication apparatus 170 is configured to implement a function of the terminal device,
the transceiver module 1702 is configured to receive information about a plurality of candidate cells from a source entity; the processing module 1701 is configured to switch to a first candidate cell of a first candidate entity, where the first candidate cell is one of the plurality of candidate cells; and the transceiver module 1702 is further configured to send first information to the first candidate entity, where the first information indicates to release a second candidate cell, and the second candidate cell is one or more of the plurality of candidate cells.

Optionally, the transceiver module 1702 is further configured to receive second information from the source entity, where the second information indicates a condition for releasing the second candidate cell.

Optionally, the second information includes information indicating a timer and/or a maximum quantity of times of switching that correspond/corresponds to the second candidate cell.

Optionally, the processing module 1701 is further configured to: when the timer expires, determine to release the second candidate cell.

Optionally, the processing module 1701 is further configured to: when a quantity of times of switching to the second candidate cell is greater than or equal to the maximum quantity of times of switching, determine to release the second candidate cell.

When the communication apparatus 170 is configured to implement a function of the source entity,
in a possible implementation, the transceiver module 1702 is configured to send information about a plurality of candidate cells of a terminal device to a first candidate entity, where the first candidate entity is an entity to which a first candidate cell belongs, and the first candidate cell is one of the plurality of candidate cells; the transceiver module 1702 is further configured to receive first information from the first candidate entity, where the first information indicates to release a second candidate cell, and the second candidate cell is one or more of the plurality of candidate cells; and the transceiver module 1702 is further configured to send the first information to a second candidate entity, where the second candidate entity is an entity to which the second candidate cell belongs; or
in another possible implementation, the transceiver module 1702 is configured to send information about a plurality of candidate cells to a terminal device; and the transceiver module 1702 is further configured to send second information to the terminal device, where the second information indicates a condition for releasing at least one of the plurality of candidate cells.

Optionally, the transceiver module 1702 is further configured to receive first information from a first candidate entity, where the first information indicates to release a second candidate cell, the first candidate entity is an entity to which a first candidate cell belongs, the first candidate cell is a serving cell of the terminal device, and the second candidate cell is one or more of the plurality of candidate cells. The transceiver module 1702 is further configured to send, to a second candidate entity, information indicating to release the second candidate cell, where the second candidate entity is an entity to which the second candidate cell belongs.

Optionally, the second information includes information indicating a timer and/or a maximum quantity of times of switching that correspond/corresponds to each of the plurality of candidate cells.

When the communication apparatus 170 is configured to implement a function of the first candidate entity,
the transceiver module 1702 is configured to receive information about a plurality of candidate cells of a terminal device from a source entity; the processing module 1701 is configured to determine that the terminal device switches to a first candidate cell of a first candidate entity, where the first candidate cell is one of the plurality of candidate cells; the transceiver module 1702 is further configured to send third information to the source entity or a second candidate entity, where the third information indicates that the terminal device switches to the first candidate cell, the second candidate entity is an entity to which a second candidate cell belongs, and the second candidate cell is one or more of the plurality of candidate cells; and the transceiver module 1702 is further configured to receive first information from the source entity or the second candidate entity, where the first information indicates to release the second candidate cell.

Optionally, the transceiver module 1702 is further configured to send second information to the terminal device based on the first information, where the second information indicates to release configuration information of the second candidate cell.

All related content of the steps in the foregoing method embodiments may be cited in function descriptions of the corresponding functional modules. Details are not described herein again.

In this application, the communication apparatus 170 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 170 in FIG. 17 is a chip or a chip system, a function/an implementation process of the transceiver module 1702 may be implemented through an input/output interface (or a communication interface) of the chip or the chip system, and a function/an implementation process of the processing module 1701 may be implemented through a processor (or a processing circuit) of the chip or the chip system.

Because the communication apparatus 170 provided in this embodiment may perform the foregoing methods, for technical effects that can be achieved by the communication apparatus 170, refer to the foregoing method embodiments. Details are not described herein again.

In a possible product form, the terminal device or the RAN entity in embodiments of this application may be implemented by using one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described in this application.

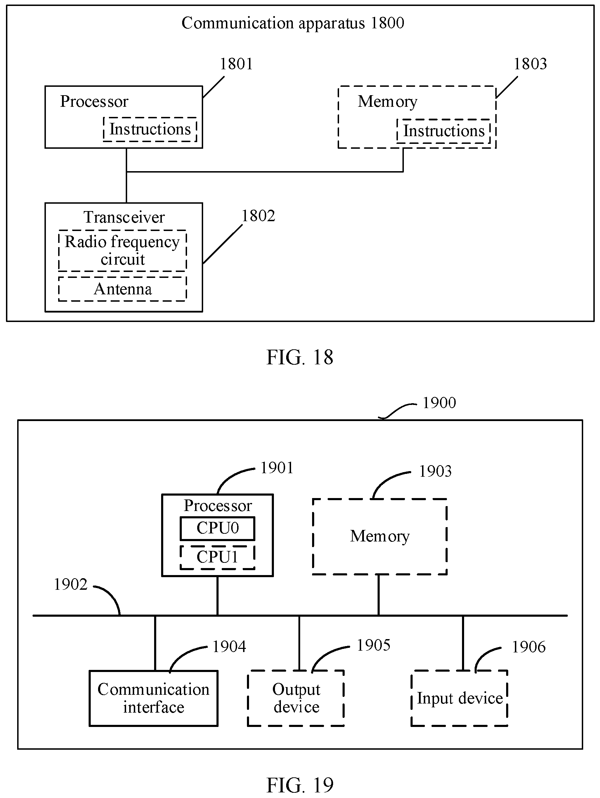

In another possible product form, the terminal device or the RAN entity in embodiments of this application may be implemented by using a general bus architecture. For ease of description, FIG. 18 is a diagram of a structure of a communication apparatus 1800 according to an embodiment of this application. The communication apparatus 1800 includes a processor 1801 and a transceiver 1802. The communication apparatus 1800 may be a RAN entity, or a chip or a chip system in the RAN entity. Alternatively, the communication apparatus 1800 may be a terminal device, or a chip or a module in the terminal device. FIG. 18 shows only main components of the communication apparatus 1800. In addition to the processor 1801 and the transceiver 1802, the communication apparatus may further include a memory 1803 and an input/output apparatus (not shown in the figure).

Optionally, the processor 1801 is mainly configured to: process a communication protocol and communication data, control the entire communication apparatus, execute a software program, and process data of the software program. The memory 1803 is mainly configured to store the software program and data. The transceiver 1802 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, a keyboard, is mainly configured to: receive data by a user and output data to the user.

Optionally, the processor 1801, the transceiver 1802, and the memory 1803 may be connected through a communication bus.

After the communication apparatus is powered on, the processor 1801 may read the software program in the memory 1803, interpret and execute instructions of the software program, and process data of the software program. When data needs to be sent in a wireless manner, the processor 1801 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave via the antenna. When data is sent to the communication apparatus, the radio frequency circuit receives a radio frequency signal through the antenna, converts the radio frequency signal into a baseband signal, and outputs the baseband signal to the processor 1801; and the processor 1801 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 170 may be in a form of the communication apparatus 1800 shown in FIG. 18.

In an example, a function/an implementation process of the processing module 1701 in FIG. 17 may be implemented by the processor 1801 in the communication apparatus 1800 shown in FIG. 18 by invoking the computer-executable instructions stored in the memory 1803. Functions/implementation processes of the transceiver module 1702 in FIG. 17 may be implemented by the transceiver 1802 in the communication apparatus 1800 shown in FIG. 18.

In still another possible product form, the RAN entity or the terminal device in this application may use a composition structure shown in FIG. 19, or include components shown in FIG. 19. FIG. 19 is a diagram of composition of a communication apparatus 1900 according to this application. The communication apparatus 1900 may be a terminal device, or a chip or a system-on-a-chip in the terminal device; or may be a RAN entity, or a module or a system-on-a-chip in the RAN entity.

As shown in FIG. 19, the communication apparatus 1900 includes at least one processor 1901 and at least one communication interface (in FIG. 19, only an example in which one communication interface 1904 and one processor 1901 are included is used for description). Optionally, the communication apparatus 1900 may further include a communication bus 1902 and a memory 1903.

The processor 1901 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1901 may be another apparatus having a processing function, for example, a circuit, a component, or a software module. This is not limited.

The communication bus 1902 is configured to connect different components in the communication apparatus 1900, so that the different components can communicate with each other. The communication bus 1902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representing the bus in FIG. 19, but this does not mean that there is only one bus or only one type of bus.

The communication interface 1904 is configured to communicate with another device or a communication network. For example, the communication interface 1904 may be a module, a circuit, a transceiver, or any apparatus that can implement communication. Optionally, the communication interface 1904 may alternatively be an input/output interface located in the processor 1901, and is configured to implement signal input and signal output of the processor.

The memory 1903 may be an apparatus having a storage function, and is configured to store instructions and/or data. The instructions may be computer programs.

For example, the memory 1903 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1903 may be independent of the processor 1901, or may be integrated with the processor 1901. The memory 1903 may be located inside the communication apparatus 1900, or may be located outside the communication apparatus 1900. This is not limited. The processor 1901 may be configured to execute the instructions stored in the memory 1903, to implement a method provided in the following embodiments of this application.

In an optional implementation, the communication apparatus 1900 may further include an output device 1905 and an input device 1906. The output device 1905 communicates with the processor 1901, and may display information in a plurality of manners. For example, the output device 1905 may be a liquid crystal display (liquid crystal display, LCD), a light emitting diode (light emitting diode, LED) display device, a cathode ray tube (cathode ray tube, CRT) display device, or a projector (projector). The input device 1906 communicates with the processor 1901, and may receive a user input in a plurality of manners. For example, the input device 1906 may be a mouse, a keyboard, a touchscreen device, or a sensor device.

In some embodiments, in terms of hardware implementation, a person skilled in the art may figure out that the communication apparatus 170 shown in FIG. 17 may be in a form of the communication apparatus 1900 shown in FIG. 19.

In an example, a function/an implementation process of the processing module 1701 in FIG. 17 may be implemented by the processor 1901 in the communication apparatus 1900 shown in FIG. 19 by invoking the computer-executable instructions stored in the memory 1903. Functions/implementation processes of the transceiver module 1702 in FIG. 17 may be implemented by the communication interface 1904 in the communication apparatus 1900 shown in FIG. 19.

It should be noted that the structure shown in FIG. 19 does not constitute a specific limitation on the RAN entity or the terminal device. For example, in some other embodiments of this application, the RAN entity or the terminal device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, "comprising" does not exclude another component or another step, and "a" or "one" does not exclude a meaning of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that such modifications and variations fall within the scope of protection defined by the following claims and equivalent technologies thereof.

## Claims

1. A communication method, wherein the method comprises:
obtaining information about a plurality of candidate cells of a terminal device;
determining that the terminal device switches to a first candidate cell of a first candidate entity, wherein the first candidate cell is one of the plurality of candidate cells; and
sending first information based on the information about the plurality of candidate cells, wherein the first information indicates to release a second candidate cell, and the second candidate cell is one or more of the plurality of candidate cells.

2. The method according to claim 1, wherein the obtaining the information about the plurality of candidate cells of the terminal device comprises: receiving the information about the plurality of candidate cells from a source entity.

3. The method according to claim 1 or 2, wherein the sending the first information comprises:
sending the first information to a source entity or a second candidate entity, wherein the second candidate entity is an entity to which the second candidate cell belongs.

4. The method according to any one of claims 1 to 3, wherein the method further comprises:
sending second information to the terminal device, wherein the second information indicates to release configuration information of the second candidate cell.

5. The method according to claim 4, wherein the sending the second information to the terminal device comprises:
sending configuration information of the first candidate cell to the terminal device, wherein the configuration information of the first candidate cell comprises the second information, and the configuration information of the first candidate cell is used by the terminal device to access the first candidate cell.

6. The method according to claim 1 or 2, wherein the determining that the terminal device switches to the first candidate cell of the first candidate entity comprises:
receiving third information from the first candidate entity, wherein the third information indicates that the terminal device switches to the first candidate cell.

7. The method according to claim 1, 2, or 6, wherein the sending the first information comprises: sending the first information to the first candidate entity.

8. The method according to any one of claims 1 to 7, wherein the first information comprises at least one of the following: identification information of the second candidate cell, identification information allocated by the source entity to the terminal device, identification information allocated by the second candidate entity to the terminal device, or identification information of the source entity, wherein the second candidate entity is an entity to which the second candidate cell belongs.

9. The method according to any one of claims 1 to 8, wherein the second candidate cell belongs to the second candidate entity, and the second candidate entity is different from the first candidate entity.

10. The method according to any one of claims 1 to 9, wherein the information about the plurality of candidate cells comprises respective identification information of the plurality of candidate cells; and the sending the first information based on the information about the plurality of candidate cells comprises:
determining, based on the respective identification information of the plurality of candidate cells, to release the second candidate cell; and
sending the first information.

11. The method according to claim 2, 3, or 8, wherein the source entity is configured to request configuration information of the plurality of candidate cells for the terminal device.

12. The method according to claim 11, wherein the source entity is a central unit CU, a source base station, or a master node MN in dual connectivity.

13. The method according to any one of claims 1 to 12, wherein the plurality of candidate cells are configured to perform at least one of the following: continuous conditional handover CHO, continuous conditional primary secondary cell addition/change CPAC, or continuous layer 1/layer 2 triggered mobility LTM.

14. A communication method, wherein the method comprises:
receiving information about a plurality of candidate cells from a source entity;
switching to a first candidate cell of a first candidate entity, wherein the first candidate cell is one of the plurality of candidate cells; and
sending first information to the first candidate entity, wherein the first information indicates to release a second candidate cell, and the second candidate cell is one or more of the plurality of candidate cells.

15. The method according to claim 14, wherein the method further comprises: receiving second information from the source entity, wherein the second information indicates a condition for releasing the second candidate cell.

16. The method according to claim 15, wherein the second information comprises information indicating a timer and/or a maximum quantity of times of switching that correspond/corresponds to the second candidate cell.

17. The method according to claim 15, wherein the method further comprises:
when the timer expires, determining to release the second candidate cell.

18. The method according to claim 16 or 17, wherein the method further comprises:
when a quantity of times of switching to the second candidate cell is greater than or equal to the maximum quantity of times of switching, determining to release the second candidate cell.

19. The method according to any one of claims 14 to 18, wherein the source entity is a central unit CU, a source base station, or a master node MN in dual connectivity.

20. The method according to any one of claims 14 to 19, wherein the plurality of candidate cells are configured to perform at least one of the following: continuous conditional handover CHO, continuous conditional primary secondary cell addition/change CPAC, or continuous layer 1/layer 2 triggered mobility LTM.

21. A communication apparatus, wherein the communication apparatus comprises a processor, and the processor is configured to run a computer program or instructions, to cause the communication apparatus to perform the method according to any one of claims 1 to 13, or cause the communication apparatus to perform the method according to any one of claims 14 to 20.

22. A computer-readable storage medium, wherein the computer-readable storage medium stores computer instructions or a computer program, and when the computer instructions or the computer program is run on a computer, the method according to any one of claims 1 to 13 is performed, or the method according to any one of claims 14 to 20 is performed.

23. A computer program product, wherein the computer program product comprises computer instructions; and when a part or all of the computer instructions are run on a computer, the method according to any one of claims 1 to 13 is performed, or the method according to any one of claims 14 to 20 is performed.

24. A chip system, comprising:
a memory, configured to store computer program instructions; and
a processor, configured to execute the computer program instructions, to cause a communication apparatus comprising the chip to perform the method according to any one of claims 1 to 13, or cause a communication apparatus comprising the chip to perform the method according to any one of claims 14 to 20.
